# EUROPEAN PATENT APPLICATION

(11) **EP 3 557 534 A1**
(43) Date of publication of application: **23.10.2019**
(21) Application number: 17888252.8
(22) Date of filing: 29.03.2017
(51) Int. Cl.: G06T 19/00

(54) **INFORMATION PROCESSING METHOD AND APPARATUS**

(30) Priority: 30.12.2016 CN 201611252815; 11.01.2017 WO PCT/CN2017/070863
(71) Applicant: Huawei Technologies Co., Ltd., Longgang District Shenzhen, Guangdong 518129 (CN)
(72) Inventor: DI, Peiyun, Shenzhen Guangdong 518129 (CN); XIE, Qingpeng, Shenzhen Guangdong 518129 (CN)
(74) Representative: Thun, Clemens
(86) International application number: PCT/CN2017/078585
(87) International publication number: WO 2018/120474

(57) **Abstract**

A streaming media information processing method and apparatus are disclosed. The streaming media information processing method includes: obtaining target spatial information of a target spatial object, where the target spatial object is one of two spatial objects that are associated with data of two images that is in target video data, the data of the two images is data of two images, the target spatial information includes same-attribute spatial information, the same-attribute spatial information includes same information between respective spatial information of the two spatial objects, and spatial information of a spatial object other than the target spatial object in the two spatial objects includes the same-attribute spatial information; and determining, based on the target spatial information, video data that needs to be played. A repeated part between the respective spatial information of the two spatial objects is replaced with a group of same-attribute spatial information, to reduce redundancy of the spatial information, thereby decreasing a data volume of the spatial information.

## Description

### TECHNICAL FIELD

The present invention relates to the streaming media processing field, and in particular, to an information processing method and apparatus.

### BACKGROUND

### I. Introduction to the MPEG-DASH technology

In November 2011, the MPEG organization approved of the DASH standard. The DASH standard (referred to as the DASH technical specification below for short) is a technical specification for transmitting a media stream according to the HTTP protocol. The DASH technical specification mainly includes two parts: a media presentation description (English: Media Presentation Description, MPD) and a media file format (English: file format).

### 1. Media file format

The media file format is a type of file format. In DASH, a server prepares a plurality of versions of bitstreams for same video content, and each version of bitstream is referred to as a representation (English: representation) in the DASH standard. The representation is a set and encapsulation of one or more bitstreams in a transmission format, and one representation includes one or more segments. Different versions of bitstreams may have different coding parameters such as bit rates and resolutions. Each bitstream is segmented into a plurality of small files, and each small file is referred to as a segment (or referred to as a segment, English: segment). A client may switch between different media representations in a process of requesting media segment data. The segment may be encapsulated based on a format (an ISO BMFF (Base Media File Format)) in the ISO/IEC 14496-12 standard, or may be encapsulated based on a format (MPEG-2 TS) in ISO/IEC 13818-1.

### 2. Media presentation description

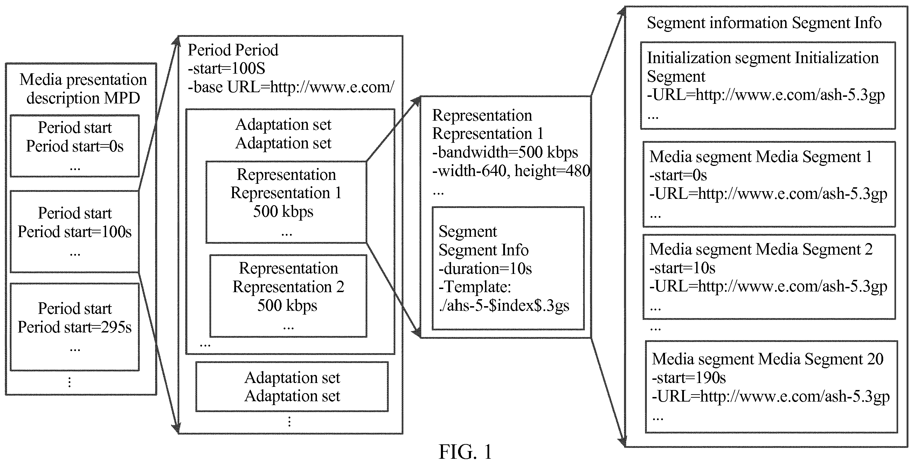

In the DASH standard, the media presentation description is referred to as an MPD, and the MPD may be an xml file. Information in the file is described in a hierarchical manner. As shown in FIG. 1, all information at a current level is inherited at a next level. Some media metadata is described in the file. The metadata can enable the client to understand media content information in the server, and the client can use the information to construct an http-URL for requesting a segment.

In the DASH standard, a media presentation (English: media presentation) is a set of structured data that presents media content. A media presentation description (English: media presentation description) is a file that normatively describes a media presentation and is used to provide a streaming media service. A period (English: period), and a group of consecutive periods form an entire media presentation, and the period has continuous and non-overlapping features. In the MPD, a representation (English: representation) is a set and encapsulation of description information of one or more bitstreams in a transmission format, and one representation includes one or more segments. An adaptation set (English: Adaptation Set) represents a set of a plurality of mutually replaceable coding versions of a same media content component, and one adaptation set includes one or more representations. A subset (English: subset) is a combination of adaptation sets. When playing all the adaptation sets in the combination, a player may obtain corresponding media content. Segment information is a media unit referenced by an HTTP uniform resource locator in the media presentation description. The segment information describes a segment of media data. The segment of the media data may be stored in a file or may be separately stored. In a possible manner, the MPD stores the segment of the media data.

For a related technical concept of the MPEG-DASH technology in the present invention, refer to related provisions in ISO/IEC 23009-1: Information technology--Dynamic adaptive streaming over HTTP (DASH)--Part 1: Media presentation description and segment formats; or refer to related provisions in a historical standard version, such as ISO/IEC 23009-1:2013 or ISO/IEC 23009-1:2012.

### II. Introduction to the virtual reality (virtual reality, VR) technology

The virtual reality technology is a computer simulation system that can create a virtual world and make the virtual world experienced. The virtual reality technology generates a simulated environment by using a computer, and is multi-source information fused system simulation of interactive three-dimensional dynamic vision and physical behavior. The technology can enable a user to be immersed in the environment. VR mainly includes aspects such as a simulated environment, perception, a natural skill, and a sensing device. The simulated environment is a computer-generated, real-time, dynamic, three-dimensional realistic image. The perception means that ideal VR should have all kinds of human perception. In addition to visual perception generated by a computer graphics technology, perception such as an auditory sensation, a tactile sensation, a force sensation, and a motion is also included, and even an olfactory sensation, a taste sensation, and the like are also included. This is also referred to as multi-perception. The natural skill refers to head or eye movement of a person, a gesture, or another human behavior or action. The computer processes data suitable for an action of a participant, makes a response to an input of the user in real time, and separately feeds back the response to five sense organs of the user. The sensing device is a three-dimensional interaction device. When a VR video (or a 360-degree video, or an omnidirectional video (English: Omnidirectional video)) is presented on a head-mounted device and a handheld device, only part of a video image corresponding to a head orientation of a user and associated audio are presented.

A difference between a VR video and a normal video (English: normal video) lies in that entire video content in the normal video is presented to a user, but VR video is about only a subset of the entire video is presented to the user (English: in VR typically only a subset of the entire video region represented by the video pictures).

### II. Introduction to spatial information

In an existing standard, descriptions of spatial information are as follows: "The SRD scheme allows Media Presentation authors to express spatial relationships between Spatial Objects. A Spatial Object is defined as a spatial part of a content component (e.g. a region of interest, or a tile) and represented by either an Adaptation Set or a Sub-Representation."

[Chinese]: Spatial information is a spatial relationship (that is, spatial relationships) between spatial objects (that is, spatial objects). A spatial object is defined as partial space of a content component, for example, an existing region of interest (English: region of interest, ROI) and tile. The spatial relationship may be described in an adaptation set and a sub-representation. In the existing standard, spatial information of the spatial object may be described in an MPD.

In the ISO/IEC 14496-12 (2012) standard document, a file includes many boxes (box) and full boxes (FullBox). Each box includes a header (Header) and data (Data). A full box is an extension of a box. The header includes a length (size) and a type (type) of the entire box. When size=0, it means that the box is a last box in the file. When size=1, it means that more bits are required to describe the box length. The data is actual data in the box, and may be pure data or more sub-boxes.

In the ISO/IEC 14496-12 (2012) standard document, a "tref box" is used to describe a relationship between tracks (track). For example, one MP4 file includes three video (video) tracks whose IDs are respectively 2, 3, and 4, and three audio tracks whose IDs are respectively 6, 7, and 8. It may be specified in a tref box for each of the track 2 and the track 6 that the track 2 and the track 6 are bound for play.

In provisions of a current standard, for example, ISO/IEC 23000-20, a reference type (reference_type) used for a reference between a media content track and a metadata track is 'cdsc'. For example, if a referenced track is obtained through parsing in a video track, and a reference type is 'cdsc', it indicates that the referenced track is the metadata track used to describe the video track. However, in actual application, there are many types of metadata that describes media content, and different types of metadata provide different use methods for a user. When using an existing method, a client needs to parse all tracks included in a file, and then determine, based on the reference type used for the reference between the media content track and the metadata track, an attribute of a track associated with media content, so as to determine attributes included in the video track, and experience provided for the user by using different attributes. In other words, in the existing method, if it is required to determine an operation that can be performed by the client when a media track is presented, the operation can be determined depending on that parsing of all tracks in a file is completed. As a result, complexity of an implementation procedure of the client is increased.

With increasing development of the virtual reality (English: virtual reality, VR) technology, increasingly more applications for viewing a VR video in a 360-degree field of view or the like are presented for a user. In a process of viewing a VR video, the user may change a field of view (English: field of view, FOV) at any time, each field of view is corresponding to video data of one spatial object (which may be understood as a region in the VR video), and a VR video image presented in the field of view of the user should also be switched as the field of view is switched.

In the prior art, when a VR video is presented, video data of spatial objects that can cover fields of view of human eyes is presented. A spatial object viewed by a user may be a region of interest selected by most users, or may be a region specified by a video producer, and the region constantly changes with time. To identify a location that is of a spatial object associated with image data and that is in the VR video, spatial information used to describe the location of the spatial object in the VR video needs to be encapsulated in a corresponding file. Because image data in video data is corresponding to a large quantity of images, a large quantity of spatial information of the large quantity of images causes an excessively large data volume.

### SUMMARY

Embodiments of the present invention provide a streaming media information processing method and apparatus, to decrease a data volume of spatial information.

The foregoing objective and other objectives are achieved by using features in the independent claims. Further implementations are reflected in the dependent claims, the specification, and the accompanying drawings.

A first aspect provides a streaming media information processing method, and the method includes:
obtaining target spatial information of a target spatial object, where the target spatial object is one of two spatial objects, the two spatial objects are associated with data of two images that is included in target video data, the target spatial information includes same-attribute spatial information, the same-attribute spatial information includes same information between respective spatial information of the two spatial objects, and spatial information of a spatial object other than the target spatial object in the two spatial objects includes the same-attribute spatial information; and
determining, based on the target spatial information, video data that needs to be played.

The target video data may be a bitstream, that is, a target video bitstream; or may be original data that is not encoded or reconstructed data obtained through reconstruction, that is, a target video sequence. When the target video data is the target video bitstream, the data of the two images may be encoded data of the two images. When the target video data is the target video sequence, the data of the two images is original data or reconstructed data of the two images.

The two images may be in a one-to-one correspondence with the two spatial objects.

The same-attribute spatial information is a group of information, and the respective spatial information of the two spatial objects share the group of information.

The obtaining target spatial information of a target spatial object may include: receiving the target spatial information of the target spatial object, from a server,.

The two images may be two frames in a video sequence. To be specific, the two images are corresponding to different moments; or the two images may be sub-images of a same frame in a video sequence, that is, the two images are corresponding to a same moment; or the two images may be sub-images of different frames in a video sequence.

A repeated part between the respective spatial information of the two spatial objects is represented by a group of same-attribute spatial information, to reduce redundancy of the spatial information, thereby decreasing a data volume of the spatial information.

The determining, based on the target spatial information, video data that needs to be played may include: determining, based on the target spatial information, whether the target spatial object includes all or some of spatial objects corresponding to a picture that needs to be played; and when the target spatial object includes all or some of the spatial objects corresponding to picture that needs to be played, determining the target video data as the video data that needs to be played.

The determining, based on the target spatial information, video data that needs to be played may include: determining, based on the target spatial information and a spatial relationship (or a track of switching a field of view) between the target spatial object and a spatial object corresponding to a picture that needs to be played, spatial information of the spatial object (or a spatial object obtained after the field of view is switched) corresponding to the picture that needs to be played, so as to further determine the video data that needs to be played. Specifically, the video data that needs to be played may be a video bitstream that needs to be played. After the target spatial information of the target spatial object is obtained, a relative location of the target spatial object in panoramic space (or referred to as a panoramic spatial object) may be determined, and then a location of the spatial object obtained after the field of view is switched may be determined in a video play process based on the target spatial information of the target spatial object and the track of switching the field of view. Further, a video bitstream that needs to be played and that is corresponding to the spatial object corresponding to the picture that needs to be played is requested from the server. In specific implementation, a request for obtaining the video bitstream that needs to be played may be sent to the server based on information such as a URL that is of a bitstream of each spatial object described and that is described in an MPD, so as to obtain the video bitstream that needs to be played, and decode and play the video bitstream that needs to be played.

According to the first aspect, in a first possible implementation of the first aspect, the target spatial information further includes different-attribute spatial information of the target spatial object, the spatial information of the other spatial object further includes different-attribute spatial information of the other spatial object, and the different-attribute spatial information of the target spatial object is different from the different-attribute information of the other spatial object.

That the different-attribute spatial information of the target spatial object is different from the different-attribute information of the other spatial object may mean that values of the two pieces of different-attribute spatial information are different.

According to the first aspect or the first implementation of the first aspect, in a second possible implementation of the first aspect, the target spatial information includes location information of a central point of the target spatial object or location information of an upper-left point of the target spatial object, and the target spatial information further includes a width of the target spatial object and a height of the target spatial object.

The target spatial information may also include location information of another location point (a lower-left point, an upper-right point, a lower-right point, or a preset point) in the target spatial object in place of the location information of the central point of the target spatial object or the location information of the upper-left point of the target spatial object.

The upper-left point is a point whose horizontal coordinate value and vertical coordinate value each are minimum in the target spatial object.

When a coordinate system corresponding to the target spatial information is an angular coordinate system, the location information of the central point or the location information of the upper-left point may be a pitch angle θ (pitch) and a yaw angle ψ (yaw), or may be a pitch angle θ (pitch), a yaw angle ψ (yaw), and a roll angle Φ (roll). Alternatively, when a coordinate system corresponding to the target spatial information is a pixel coordinate system, the location information of the central point or the location information of the upper-left point may be a horizontal coordinate in a unit of a pixel and a vertical coordinate in a unit of a pixel.

According to the first aspect or the first implementation of the first aspect, in a third possible implementation of the first aspect, the target spatial information includes location information of an upper-left point of the target spatial object and location information of a lower-right point of the target spatial object.

The target spatial information may also include location information of an upper-right point of the target spatial object and location information of a lower-left point of the target spatial object.

According to any one of the first aspect or the first implementation of the first aspect to the third implementation of the first aspect, in a fourth possible implementation of the first aspect, the target spatial information includes spatial rotation information of the target spatial object.

The spatial rotation information of the target spatial object may be used to indicate a degree at which the target spatial object rotates relative to a horizontal coordinate axis or a vertical coordinate axis of a panoramic spatial object, and the target spatial object is in the panoramic spatial object.

When the coordinate system corresponding to the target spatial information is an angular coordinate system, the spatial rotation information may be a roll angle Φ (roll). Alternatively, when the coordinate system corresponding to the target spatial information is a pixel coordinate system, the spatial rotation information may be represented by using a motion vector that is of a location point in the target spatial object and that is obtained through conversion by using the roll angle, and the motion vector is in a unit of a pixel.

According to any one of the first aspect or the first implementation of the first aspect to the fourth implementation of the first aspect, in a fifth possible implementation of the first aspect, the target spatial information is encapsulated in spatial information data or a spatial information track (track), the spatial information data is a bitstream of the target video data, metadata of the target video data, or a file independent of the target video data, and the spatial information track is a track independent of the target video data.

The file independent of the target video data may be a spatial information file used to describe spatial information. The track independent of the target video data may be a spatial information track used to describe spatial information.

When the target spatial information is encapsulated in the bitstream of the target video data, the target spatial information may be encapsulated in an auxiliary enhancement information unit or a parameter set unit in the bitstream of the target video data, or the target spatial information may be encapsulated in a segment of a representation in which the target video data is located. Specifically, the target spatial information may be encapsulated in a box (for example, a trun box or a tfhd box).

The same-attribute spatial information and the different-attribute spatial information of the target spatial object may be encapsulated in a same box, or may be encapsulated in different boxes. Specifically, the same-attribute spatial information may be encapsulated in a 3dsc box, and the different-attribute spatial information of the target spatial object may be encapsulated in an mdat box.

According to the fifth implementation of the first aspect, in a sixth possible implementation of the first aspect, the spatial information data or the spatial information track further includes a spatial information type identifier used to indicate a type of the same-attribute spatial information, and the spatial information type identifier is used to indicate information that is in the target spatial information and that belongs to the same-attribute spatial information.

It may be learned from definitions that the same-attribute spatial information and the different-attribute spatial information of the target spatial object are complementary. Therefore, when the spatial information type identifier is used to indicate the information that is in the target spatial information and that belongs to the same-attribute spatial information, the spatial information type identifier may also be used to indicate information that is in the target spatial information and that belongs to the different-attribute spatial information of the target spatial object.

The spatial information type identifier may also be used to indicate a spatial information type of the same-attribute spatial information or the different-attribute spatial information of the target spatial object. An optional spatial information type may include but is not limited to: spatial information including location information of a spatial object but not including width and height information of the spatial object, spatial information including width and height information of a spatial object but not including location information of the spatial object, and spatial information including width and height information of a spatial object and location information of the spatial object.

The spatial information type identifier may also be used to indicate spatial object types of the two spatial objects. An optional spatial object type may include but is not limited to: a spatial object whose location, width, and height remain unchanged, a spatial object whose location changes and whose width and height remain unchanged, a spatial object whose location remains unchanged and whose width and height change, and a spatial object whose location, width, and height all change.

For the second implementation of the first aspect, when the spatial information type identifier is a first preset value, the spatial information type identifier is used to indicate that the information that is in the target spatial information and that belongs to the same-attribute spatial information is the location information of the central point of the target spatial object or the location information of the upper-left point of the target spatial object, the width of the target spatial object, and the height of the target spatial object. When the spatial information type identifier is a second preset value, the spatial information type identifier is used to indicate that the information that is in the target spatial information and that belongs to the same-attribute spatial information is the width of the target spatial object and the height of the target spatial object. When the spatial information type identifier is a third preset value, the spatial information type identifier is used to indicate that the target spatial information has no information belonging to the same-attribute spatial information.

Correspondingly, for the second implementation of the first aspect, when the spatial information type identifier is the first preset value, the spatial information type identifier further indicates that no different-attribute spatial information exists. When the spatial information type identifier is the second preset value, the spatial information type identifier further indicates that the different-attribute spatial information of the target spatial object is the location information of the central point of the target spatial object or the location information of the upper-left point of the target spatial object. When the spatial information type identifier is the third preset value, the spatial information type identifier further indicates that the different-attribute spatial information of the target spatial object is the location information of the central point of the target spatial object or the location information of the upper-left point of the target spatial object, the width of the target spatial object, and the height of the target spatial object.

For the third implementation of the first aspect, when the spatial information type identifier is a fourth preset value, the spatial information type identifier is used to indicate that the information that is in the target spatial information and that belongs to the same-attribute spatial information is the location information of the upper-left point of the target spatial object and the location information of the lower-right point of the target spatial object. When the spatial information type identifier is a fifth preset value, the spatial information type identifier is used to indicate that the information that is in the target spatial information and that belongs to the same-attribute spatial information is the location information of the lower-right point of the target spatial object. When the spatial information type identifier is a sixth preset value, the spatial information type identifier is used to indicate that the target spatial information has no information belonging to the same-attribute spatial information. It should be noted that the location information of the upper-left point of the target spatial object or the location information of the lower-right point of the target spatial object may be replaced with the width of the target spatial object and the height of the target spatial object.

Correspondingly, for the third implementation of the first aspect, when the spatial information type identifier is the fourth preset value, the spatial information type identifier further indicates that no different-attribute spatial information exists. When the spatial information type identifier is the fifth preset value, the spatial information type identifier further indicates that the different-attribute spatial information of the target spatial object is the location information of the central point of the target spatial object or the location information of the upper-left point of the target spatial object. When the spatial information type identifier is the sixth preset value, the spatial information type identifier further indicates that the different-attribute spatial information of the target spatial object is the location information of the upper-left point of the target spatial object and the location information of the lower-right point of the target spatial object. It should be noted that the location information of the upper-left point of the target spatial object or the location information of the lower-right point of the target spatial object may be replaced with the width of the target spatial object and the height of the target spatial object.

According to the sixth implementation of the first aspect, in a seventh possible implementation of the first aspect, when the spatial information type identifier indicates that the target spatial information has no information belonging to the same-attribute spatial information, the same-attribute spatial information includes a minimum value of the width of the target spatial object, a minimum value of the height of the target spatial object, a maximum value of the width of the target spatial object, and a maximum value of the height of the target spatial object.

According to the sixth implementation of the first aspect or the seventh implementation of the first aspect, in an eighth possible implementation of the first aspect, the spatial information type identifier and the same-attribute spatial information are encapsulated in a same box.

According to any one of the fifth implementation of the first aspect to the eighth implementation of the first aspect, in a ninth possible implementation of the first aspect, the spatial information data or the spatial information track further includes a coordinate system identifier used to indicate a coordinate system corresponding to the target spatial information, and the coordinate system is a pixel coordinate system or an angular coordinate system.

When the coordinate system is a pixel coordinate system, the location information is represented by coordinates in a unit of a pixel, and the width and the height are also represented in a unit of a pixel. When the coordinate system is an angular coordinate system, the location information is represented by an angle. For example, the location information may be a pitch angle θ (pitch) and a yaw angle ψ (yaw), or may be a pitch angle θ (pitch), a yaw angle ψ (yaw), and a roll angle Φ (roll). The width and the height each are used to represent an angle range by using an angle.

According to the ninth implementation of the first aspect, in a tenth possible implementation of the first aspect, the coordinate system identifier and the same-attribute spatial information are encapsulated in a same box.

According to any one of the fifth implementation of the first aspect to the tenth implementation of the first aspect, in an eleventh possible implementation of the first aspect, the spatial information data or the spatial information track further includes a spatial rotation information identifier, and the spatial rotation information identifier is used to indicate whether the target spatial information includes the spatial rotation information of the target spatial object.

The spatial rotation information identifier and the same-attribute spatial information may be encapsulated in a same box, or the spatial rotation information identifier and the different-attribute spatial information of the target spatial object may be encapsulated in a same box. Specifically, in a case in which the spatial rotation information identifier and different-attribute spatial information of the target spatial object are encapsulated in a same box, when the spatial rotation information identifier indicates that the target spatial information includes the spatial rotation information of the target spatial object, the different-attribute spatial information of the target spatial object includes the spatial rotation information.

When the spatial rotation information identifier indicates that the target spatial information includes the spatial rotation information of the target spatial object, it indicates that the target spatial object rotates. When the spatial rotation information identifier indicates that the target spatial information does not include the spatial rotation information of the target spatial object, it indicates that the target spatial object does not rotate.

A second aspect provides a streaming media information processing method, and the method includes:
obtaining respective spatial information of two spatial objects that are associated with data of two images that is in target video data; and
determining target spatial information of a target spatial object based on the respective spatial information of the two spatial objects, where the target spatial object is one of two spatial objects, the target spatial information includes same-attribute spatial information, the same-attribute spatial information includes same information between the respective spatial information of the two spatial objects, and spatial information of a spatial object other than the target spatial object in the two spatial objects includes the same-attribute spatial information, where
the method may further include: sending the target spatial information to a client.

According to the second aspect, in a first possible implementation of the second aspect, the target spatial information may further include different-attribute spatial information of the target spatial object, the spatial information of the other spatial object may further include different-attribute spatial information of the other spatial object, and the different-attribute spatial information of the target spatial object is different from the different-attribute information of the other spatial object.

According to the second aspect or the first implementation of the second aspect, in a second possible implementation of the second aspect, the target spatial information may include location information of a central point of the target spatial object or location information of an upper-left point of the target spatial object, and the target spatial information may further include a width of the target spatial object and a height of the target spatial object.

Correspondingly, the respective spatial information of the two spatial objects may include location information of respective central points of the two spatial objects or location information of respective upper-left points of the two spatial objects, and the respective spatial information of the two spatial objects may further include respective widths of the two spatial objects and respective heights of the two spatial objects.

According to the second aspect or the first implementation of the second aspect, in a third possible implementation of the second aspect, the target spatial information may include location information of an upper-left point of the target spatial object and location information of a lower-right point of the target spatial object.

Correspondingly, the respective spatial information of the two spatial objects may include location information of respective upper-left points of the two spatial objects and location information of respective lower-right points of the two spatial objects.

According to any one of the second aspect or the first implementation of the second aspect to the third implementation of the second aspect, in a fourth possible implementation of the second aspect, the target spatial information may include spatial rotation information of the target spatial object.

Correspondingly, the respective spatial information of the two spatial objects may include respective spatial rotation information of the two spatial objects.

According to any one of the second aspect or the first implementation of the second aspect to the fourth implementation of the second aspect, in a fifth possible implementation of the second aspect, the target spatial information may be encapsulated in spatial information data or a spatial information track (track), the spatial information data may be a bitstream of the target video data, metadata of the target video data, or a file independent of the target video data, and the spatial information track may be a track independent of the target video data.

According to the fifth implementation of the second aspect, in a sixth possible implementation of the second aspect, the spatial information data or the spatial information track may further include a spatial information type identifier used to indicate a type of the same-attribute spatial information, and the spatial information type identifier is used to indicate information that is in the target spatial information and that belongs to the same-attribute spatial information.

According to the sixth implementation of the second aspect, in a seventh possible implementation of the second aspect, when the spatial information type identifier indicates that the target spatial information has no information belonging to the same-attribute spatial information, the same-attribute spatial information may include a minimum value of the width of the target spatial object, a minimum value of the height of the target spatial object, a maximum value of the width of the target spatial object, and a maximum value of the height of the target spatial object.

According to the sixth implementation of the second aspect or the seventh implementation of the second aspect, in an eighth possible implementation of the second aspect, the spatial information type identifier and the same-attribute spatial information may be encapsulated in a same box.

According to any one of the fifth implementation of the second aspect to the eighth implementation of the second aspect, in a ninth possible implementation of the second aspect, the spatial information data or the spatial information track may further include a coordinate system identifier used to indicate a coordinate system corresponding to the target spatial information, and the coordinate system is a pixel coordinate system or an angular coordinate system.

According to the ninth implementation of the second aspect, in a tenth possible implementation of the second aspect, the coordinate system identifier and the same-attribute spatial information may be encapsulated in a same box.

According to any one of the fifth implementation of the second aspect to the tenth implementation of the second aspect, in an eleventh possible implementation of the second aspect, the spatial information data or the spatial information track may further include a spatial rotation information identifier, and the spatial rotation information identifier is used to indicate whether the target spatial information includes the spatial rotation information of the target spatial object.

A third aspect provides a streaming media information processing apparatus, and the apparatus includes:
an obtaining module, configured to obtain target spatial information of a target spatial object, where the target spatial object is one of two spatial objects, the two spatial objects are associated with data of two images that is included in target video data, the target spatial information includes same-attribute spatial information, the same-attribute spatial information includes same information between respective spatial information of the two spatial objects, and spatial information of a spatial object other than the target spatial object in the two spatial objects includes the same-attribute spatial information; and
a determining module, configured to determine, based on the target spatial information obtained by the obtaining module, video data that needs to be played, where
the obtaining module may be configured to receive the target spatial information from a server.

According to the third aspect, in a first possible implementation of the third aspect, the target spatial information further includes different-attribute spatial information of the target spatial object, the spatial information of the other spatial object further includes different-attribute spatial information of the other spatial object, and the different-attribute spatial information of the target spatial object is different from the different-attribute information of the other spatial object.

According to the third aspect or the first implementation of the third aspect, the target spatial information includes location information of a central point of the target spatial object or location information of an upper-left point of the target spatial object, and the target spatial information further includes a width of the target spatial object and a height of the target spatial object.

According to the third aspect or the first implementation of the third aspect, in a third possible implementation of the third aspect, the target spatial information includes location information of an upper-left point of the target spatial object and location information of a lower-right point of the target spatial object.

According to any one of the third aspect or the first implementation of the third aspect to the third implementation of the third aspect, in a fourth possible implementation of the third aspect, the target spatial information includes spatial rotation information of the target spatial object.

According to any one of the third aspect or the first implementation of the third aspect to the fourth implementation of the third aspect, in a fifth possible implementation of the third aspect, the target spatial information is encapsulated in spatial information data or a spatial information track (track), the spatial information data is a bitstream of the target video data, metadata of the target video data, or a file independent of the target video data, and the spatial information track is a track independent of the target video data.

According to the fifth implementation of the third aspect, in a sixth possible implementation of the third aspect, the spatial information data or the spatial information track further includes a spatial information type identifier used to indicate a type of the same-attribute spatial information, and the spatial information type identifier is used to indicate information that is in the target spatial information and that belongs to the same-attribute spatial information.

According to the sixth implementation of the third aspect, in a seventh possible implementation of the third aspect, when the spatial information type identifier indicates that the target spatial information has no information belonging to the same-attribute spatial information, the same-attribute spatial information includes a minimum value of the width of the target spatial object, a minimum value of the height of the target spatial object, a maximum value of the width of the target spatial object, and a maximum value of the height of the target spatial object.

According to the sixth implementation of the third aspect or the seventh implementation of the third aspect, in an eighth possible implementation of the third aspect, the spatial information type identifier and the same-attribute spatial information are encapsulated in a same box.

According to any one of the fifth implementation of the third aspect to the eighth implementation of the third aspect, in a ninth possible implementation of the third aspect, the spatial information data or the spatial information track further includes a coordinate system identifier used to indicate a coordinate system corresponding to the target spatial information, and the coordinate system is a pixel coordinate system or an angular coordinate system.

According to the ninth implementation of the third aspect, in a tenth possible implementation of the third aspect, the coordinate system identifier and the same-attribute spatial information are encapsulated in a same box.

According to any one of the fifth implementation of the third aspect to the tenth implementation of the third aspect, in an eleventh possible implementation of the third aspect, the spatial information data or the spatial information track further includes a spatial rotation information identifier, and the spatial rotation information identifier is used to indicate whether the target spatial information includes the spatial rotation information of the target spatial object.

A fourth aspect provides a streaming media information processing apparatus, and the apparatus includes:
an obtaining module, configured to obtain respective spatial information of two spatial objects that are associated with data of two images that is in target video data; and
a determining module, configured to determine target spatial information of a target spatial object based on the respective spatial information of the two spatial objects that is obtained by the obtaining module, where the target spatial object is one of two spatial objects, the target spatial information includes same-attribute spatial information, the same-attribute spatial information includes same information between the respective spatial information of the two spatial objects, and spatial information of a spatial object other than the target spatial object in the two spatial objects includes the same-attribute spatial information, where
the apparatus may further include a sending module, configured to send the target spatial information determined by the determining module to a client.

According to the fourth aspect, in a first possible implementation of the fourth aspect, the target spatial information may further include different-attribute spatial information of the target spatial object, the spatial information of the other spatial object further includes different-attribute spatial information of the other spatial object, and the different-attribute spatial information of the target spatial object is different from the different-attribute information of the other spatial object.

According to the fourth aspect or the first implementation of the fourth aspect, in a second possible implementation of the fourth aspect, the target spatial information may include location information of a central point of the target spatial object or location information of an upper-left point of the target spatial object, and the target spatial information may further include a width of the target spatial object and a height of the target spatial object.

Correspondingly, the respective spatial information of the two spatial objects may include location information of respective central points of the two spatial objects or location information of respective upper-left points of the two spatial objects, and the respective spatial information of the two spatial objects may further include respective widths of the two spatial objects and respective heights of the two spatial objects.

According to the fourth aspect or the first implementation of the fourth aspect, in a third possible implementation of the fourth aspect, the target spatial information may include location information of an upper-left point of the target spatial object and location information of a lower-right point of the target spatial object.

Correspondingly, the respective spatial information of the two spatial objects may include location information of respective upper-left points of the two spatial objects and location information of respective lower-right points of the two spatial objects.

According to any one of the fourth aspect or the first implementation of the fourth aspect to the third implementation of the fourth aspect, in a fourth possible implementation of the fourth aspect, the target spatial information may include spatial rotation information of the target spatial object.

Correspondingly, the respective spatial information of the two spatial objects may include respective spatial rotation information of the two spatial objects.

According to any one of the fourth aspect or the first implementation of the fourth aspect to the fourth implementation of the fourth aspect, in a fifth possible implementation of the fourth aspect, the target spatial information may be encapsulated in spatial information data or a spatial information track (track), the spatial information data may be a bitstream of the target video data, metadata of the target video data, or a file independent of the target video data, and the spatial information track may be a track independent of the target video data.

According to the fifth implementation of the fourth aspect, in a sixth possible implementation of the fourth aspect, the spatial information data or the spatial information track may further include a spatial information type identifier used to indicate a type of the same-attribute spatial information, and the spatial information type identifier is used to indicate information that is in the target spatial information and that belongs to the same-attribute spatial information.

According to the sixth implementation of the fourth aspect, in a seventh possible implementation of the fourth aspect, when the spatial information type identifier indicates that the target spatial information has no information belonging to the same-attribute spatial information, the same-attribute spatial information may include a minimum value of the width of the target spatial object, a minimum value of the height of the target spatial object, a maximum value of the width of the target spatial object, and a maximum value of the height of the target spatial object.

According to the sixth implementation of the fourth aspect or the seventh implementation of the fourth aspect, in an eighth possible implementation of the fourth aspect, the spatial information type identifier and the same-attribute spatial information may be encapsulated in a same box.

According to any one of the fifth implementation of the fourth aspect to the eighth implementation of the fourth aspect, in a ninth possible implementation of the fourth aspect, the spatial information data or the spatial information track may further include a coordinate system identifier used to indicate a coordinate system corresponding to the target spatial information, and the coordinate system is a pixel coordinate system or an angular coordinate system.

According to the ninth implementation of the fourth aspect, in a tenth possible implementation of the fourth aspect, the coordinate system identifier and the same-attribute spatial information may be encapsulated in a same box.

According to any one of the fifth implementation of the fourth aspect to the tenth implementation of the fourth aspect, in an eleventh possible implementation of the fourth aspect, the spatial information data or the spatial information track may further include a spatial rotation information identifier, and the spatial rotation information identifier is used to indicate whether the target spatial information includes the spatial rotation information of the target spatial object.

A fifth aspect provides a streaming media information processing apparatus, and the apparatus includes a processor and a memory. The memory is configured to store code, and the processor reads the code stored in the memory, to perform the method provided in the first aspect.

A sixth aspect provides a computer storage medium, and the computer storage medium is configured to store a computer software instruction executed by the processor in the fifth aspect, to perform the method provided in the first aspect.

A seventh aspect provides a streaming media information processing apparatus, and the apparatus includes a processor and a memory. The memory is configured to store code, and the processor reads the code stored in the memory, to perform the method provided in the second aspect.

An eighth aspect provides a computer storage medium, and the computer storage medium is configured to store a computer software instruction executed by the processor in the seventh aspect, to perform the method provided in the second aspect.

In a possible implementation of the embodiments of the present invention, a description manner of a reference type (reference type) of a reference between media data and metadata is disclosed. Based on a reference type stipulated in an existing draft standard, different reference types are defined for different methods for using metadata, so as to help a client perform corresponding processing based on a reference type.

In a possible implementation of the embodiments of the present invention, the reference type of the reference between the media data and the metadata is stored in a media data track (track) or a metadata track. In a possible implementation, the reference type of the reference between the media data and the metadata is transmitted in a form of a box (box). For related definitions of a track and a box, refer to related provisions in the existing MPEG-DASH standard and ISO/IEC 14496-12. Details are not described herein again. In an example, information about the reference type may be stored in a "tref" box.

In a possible implementation of the embodiments of the present invention, the media data is video data, and the reference type of the reference between the media data and metadata is stored in a video track. For example, the tref box is stored in metadata that describes the video track.

In an example, a track including the tref box is a referenced video track (the referenced video track), and is associated with the metadata track by using the reference type that is of the reference between the media data and the metadata and that is in the tref box. The referenced metadata track may be determined by using a track ID.

In a possible implementation of the embodiments of the present invention, the reference type may be used to describe one or more pieces of the following information:
a region of interest (region of interest, ROI) in the media data, a spatial region covered by the media data, quality information associated with the ROI in the media data, and quality information associated with the spatial region covered by the media data.

In an example of the embodiments of the present invention, the reference type may be used to describe one or more pieces of the following information:
spatial location information that is of an ROI in a spatial object corresponding to the media data and that is on a sphere, on a 2D plane, or in a mapped image; or
spatial location information that is of a region covered by the media data and that is on a sphere, on a 2D plane, or in a mapped image; or
spatial quality information of the ROI or the covered region.

The foregoing ROI information is included in a timed metadata track of the ROI, and the quality information is included in a timed metadata track of quality.

In an example of the embodiments of the present invention, a 'tref' box of the media data track includes the reference type representing the reference between the media data and the metadata. The reference type may be used to describe one or more pieces of the following information:
2D spatial location information of a region of interest (region of interest, ROI) in a spatial object corresponding to the media data, spatial location information that is of an ROI in a spatial object corresponding to the media data and that is on a sphere, spatial location information that is of an ROI in a spatial object corresponding to the media data and that is in a mapped image, 2D spatial location information of a spatial object corresponding to the media data, spatial location information that is of a spatial object corresponding to the media data and that on a sphere, spatial location information that is of a spatial object corresponding to the media data and that in a mapped image, quality information of a 2D spatial location of an ROI in a spatial object corresponding to the media data, quality information of a spatial location that is of an ROI in a spatial object corresponding to the media data and that is on a sphere, quality information of a spatial location that is of an ROI in a spatial object corresponding to the media data and that is in a mapped image, quality information of a 2D spatial location of a spatial object corresponding to the media data, quality information of a spatial location that is of a spatial object corresponding to the media data and that is on a sphere, or quality information of a spatial location that is of a spatial object corresponding to the media data and that is in a mapped image.

In an example of the embodiments of the present invention, a value of the reference type is rois, indicating that a referenced track includes region information of the ROI on a sphere (this track contains the region information of the ROI on the sphere). The region information of the ROI is a spatial region that describes an image corresponding to a sample in a referenced video track. The client may obtain the region information of the ROI by parsing a sample in a timed metadata track of the ROI, and present, by using the ROI information, an ROI of the image corresponding to the sample in the referenced video track (The client can use the sample in this track to render the ROI on the sphere).

In an example of the embodiments of the present invention, a value of the reference type is roiq, indicating that a referenced track includes quality information of an ROI that is of an image corresponding to a sample in a referenced video track and that is on a sphere (this track contains the quality information of the ROI on the sphere for the referenced video track). The client may obtain quality of the ROI of the referenced video data by parsing a sample in a timed metadata track of quality (the client can use the sample in this track to know the quality of the ROI object on the sphere).

In an example of the embodiments of the present invention, a value of the reference type is conc, indicating that a referenced track includes coverage information that is of an image corresponding to a sample in a video track and that is on a sphere (this track provides information on the area on the spherical surface for the referenced video track). The referenced metadata track may be recommended viewpoint timed metadata track (this track may be a recommended viewport timed metadata track), and the referenced video track may be a video track in a field of view of a director (the referenced video track may be a director's cut video track).

In an example of the embodiments of the present invention, a correspondence between a value and described information that are of a reference type (reference_type) is shown in the following:

**Table 1**

| Value of reference_type | Described reference relationship |
|---|---|
| ri2d | A track of metadata associated with media data is a spatial information track, and a sample in the track describes 2D spatial location information of an ROI in a spatial object corresponding to the media data |
| rois | A track of metadata associated with media data is a spatial information track, and a sample in the track describes spatial location information that is of an ROI in a spatial object corresponding to the media data and that is on a sphere |
| ri2p | A track of metadata associated with media data is a spatial information track, and a sample in the track describes spatial location information that is of an ROI in a spatial object corresponding to the media data and that is in a mapped image |
| cv2d | A track of metadata associated with media data is a spatial information track, and a sample in the track describes 2D spatial location information of a spatial object corresponding to the media data |
| cvsp | A track of metadata associated with media data is a spatial information track, and a sample in the track describes spatial location information that is of a spatial object corresponding to the media data and that is on a sphere |
| cv2p | A track of metadata associated with media data is a spatial information track, and a sample in the track describes spatial location information that is of a spatial object corresponding to the media data and that is in a mapped image |

In the embodiments of the present invention, on the server side, when media data encapsulates syntax of a 'tref' box, a reference type of a reference between the media data and metadata that has a reference with the media data is encapsulated. After the client parses data of a media track, by using information described in the reference type of the reference between the media data and the metadata, the client may learn what processing can be performed on the video data. In this method, parsing of tracks can be decoupled from each other, and complexity in an implementation procedure of the client is reduced. The client may request corresponding track data according to different processing requirements.

The ROI in the embodiments of the present invention may be a field of view, or may be a recommended field of view, for example, a field of view of an author.

In an embodiment of the present invention, the field of view or the recommended field of view may be a coverage area, and the coverage area is a spatial region of a spatial object corresponding to media data.

In an implementation of the embodiments of the present invention, a track of media data includes a reference type of a reference between the media data and metadata that has a reference relationship with the media data. The reference type may describe a 2D spatial location of an ROI in a spatial object corresponding to the media data, a spatial location that is of an ROI in a spatial object corresponding to the media data and that is on a sphere, or a spatial location that is of an ROI in a spatial object corresponding to the media data and that is in a mapped image.

In a specific example, the media data track includes a 'tref' box.

A value of reference_type in the 'tref' box is ri2d, and the value indicates that the media data is associated with a timed metadata track of the ROI. A sample (sample) in the track in the ROI is 2D spatial location information of the ROI in the spatial object corresponding to the media data, and the 2D location information may be a location defined in the existing ISO/IEC 23001-10 standard.

Alternatively, a value of reference_type is rois, and a sample (sample) in a track in the ROI is spatial location information that is of the ROI in the spatial object corresponding to the media data and that is on the sphere. The spatial location information on the sphere may be a sample that is in a timed metadata track on the sphere and that is defined in the existing ISO/IEC 23000-20 standard.

Alternatively, a value of reference_type is ri2p, and the value indicates that the media data is associated with a timed metadata track of the ROI. A sample (sample) in a track in the ROI is spatial location information that is of the ROI in the spatial object corresponding to the media data and that is in the mapped image.

In a corresponding example, there may be the following processing manners of the client:
1. The client parses a track of media data to obtain a 'tref' box in the track, where a track ID (which may be any non-zero integer) of the media data track is 1; and obtains, from the' tref 'box, a referenced track whose reference_type value is 'ri2d', 'rois', or 'ri2p', where a track ID (which may be any non-zero integer) of the referenced track is 2.
2. The client determines, based on 'ri2d', that the track whose track ID is 2 describes 2D spatial location information of an ROI in a spatial object corresponding to the media data; or
   determines, based on 'rois', that the track whose track ID is 2 describes spatial location information that is of an ROI in a spatial object corresponding to the media data and that is on a sphere; or
   determines, based on 'ri2p', that the track whose track ID is 2 describes spatial location information that is of an ROI in a spatial object corresponding to the media data and that is in a mapped image.
3. The client may provide an ROI option on a user interface, and a user chooses whether to view content in the ROI; and if the user chooses to view the content in the ROI, the client presents the content in the ROI; or the client directly presents content in the ROI.
4. Before the client needs to present the content in the ROI, the client parses a timed metadata track whose track ID=2, to obtain spatial location information of the ROI from the track, and intercepts the content in the ROI from video content based on the spatial location information, and presents the content in the ROI. A type of metadata referenced by the track is clearly described in tref metadata in the track, so that parsing of tracks performed by the client is decoupled from each other, and complexity in an implementation procedure of the client is reduced.

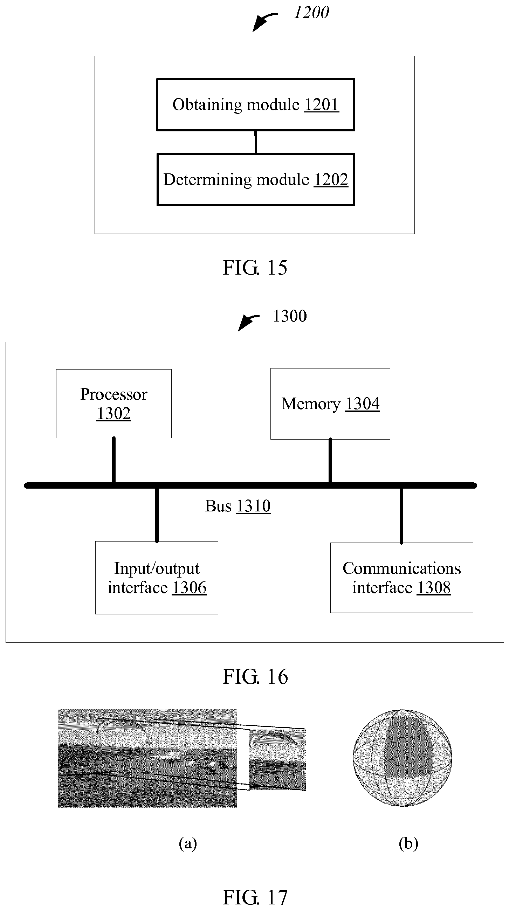

In a possible implementation of the embodiments of the present invention, as shown in FIG. 17, coverage information describes a region in which media content of a current track is captured in entire source video content. The region may be a region in a VR sphere, may be a region in a 2D image, or may be a region captured after a sphere is mapped to a 2D image. As described in FIG. 17, spatial location information in a small graph on the right in FIG. 17 (a) is coverage information of the small graph in a large graph on the left. In a spherical graph (17 (a)), a region captured on the sphere for a gray region is a coverage area of the gray region. Description of a reference type in a media track in the coverage area is added to a 'tref' box. Description information indicates that the metadata is 2D spatial location information of a spatial object corresponding to media data, or spatial location information that is of a spatial object corresponding to media data and that is on the sphere, or spatial location information that is of a spatial object corresponding to media data and that is in a mapped image.

In a possible manner of the embodiments of the present invention, the coverage information is described by using a box. A specific example is shown below:

```
            Coverage information box
      Box Type: 'covi'
      Container: Projected omnidirectional video box ('povd')
      Mandatory: No
      Quantity: Zero or one
```

In an example, the box provides information in a region on a sphere represented by a projected frame associated with a container ProjctedOmnidirectionalVideoBox. (This box provides information on the area on the spherical surface that is represented by the projected frame associated with the container ProjctedOmnidirectionalVideoBox). If data has no box representing the coverage information, it indicates that the projected frame is a representation corresponding to the full sphere (The absence of this box indicates that the projected frame is a representation of the full sphere).

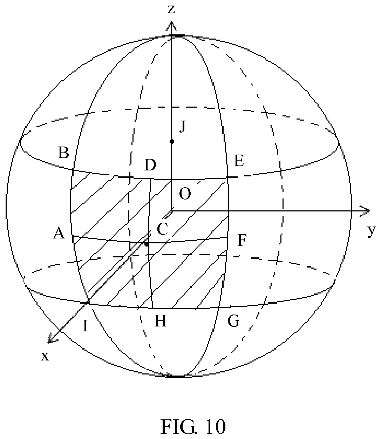

When a projection format is equiangular projection, a spherical region represented by the projected frame is a region specified by two yaw circles and two pitch circles, as shown in FIG. 10 (When the projection format is the equirectangular projection, the spherical region represented by the projected frame is the region specified by two yaw circles and two pitch circles, as illustrated fig 10).

In an example of the embodiments of the present invention, the coverage information is described in the following manner:

```
          aligned(8) class CoveragelnformationBox extends FullBox('covi', version
 = 0, flags) {
    unsigned int(1) dynamic_range_flag;
     if (dynamic_range_flag == 0) {
        unsigned int(8) shape_type;
        bit(7) reserved = 0;
        unsigned int(16) static_hor_range;
        unsigned int(16) static_ver_range;
    }
 } }
```

An element hor_range and an element ver range specify horizontal and vertical ranges of an image that is corresponding to a sample (sample) in a video track and that is on a sphere, and may be in a unit of a 0.01 degree.

In an example, hor_range and ver_range specify a range of a central point of a region. A range of hor_range should be from 1 to 36000, a range of ver_range should be from 1 to 36000. center_pitch+ver_range÷2 is not greater than 18000, and center_pitch-ver_range÷2 is not less than -18000. (hor_range and ver_range specify the range through the central point of the region. hor_range shall be in the range of 1 to 36000, inclusive. ver_range shall be in the range of 1 to 36000, inclusive. center_pitch+ver_range÷2 shall not be greater than 18000. center_pitch-ver_range÷2 shall not be less than-18000).

In an example of the embodiments of the present invention, when a value of dynamic_range_flag is equal to 0, it indicates that horizontal and vertical ranges corresponding to all samples in a sample entry remain unchanged (dynamic_range_flag equal to 0 specifies that the horizontal and vertical ranges of the region remain unchanged in all samples referring to this sample entry). In this case, horizontal and vertical ranges that are of images corresponding to these samples and that are on a sphere may be described in data of the sample entry.

In an example of the embodiments of the present invention, when a value of dynamic_range_flag is equal to 1, it indicates that horizontal and vertical ranges corresponding to the sample are described in a sample format (dynamic_range_flag equal to 1 specifies that the horizontal and vertical ranges of the region are indicated in the sample format).

In an example of the embodiments of the present invention, a coverage information track is used to describe a coverage area that is of an image corresponding to a sample in a video track and that is on a sphere.

In an example, a coverage timed metadata track is used to indicate a coverage area of video content on a sphere.

In an example, an entry type of a sample in the coverage timed metadata track is 'covg'.

In an example, an element RegionOnSphereSample may be used to describe sample syntax in the coverage timed metadata track. For a specific example of the element RegionOnSphereSample, refer to related provisions in an existing standard, for example, refer to a related example in ISO/IEC 23000-20.

In an example, a value of shape_type in RegionOnSphereConfigBox in the sample entry is 0.

In an example, an element static_hor_range and an element static_ver_range, or an element hor_range and an element ver_range are respectively used to indicate a coverage area of a corresponding horizontal viewpoint and a coverage area of a corresponding vertical viewpoint. An element center_yaw and an element center_pitch are used to indicate a central point of the coverage area.

In an example, a value of reference_type in a 'tref' box is cv2d, and the semantic meaning indicates that media data is associated with a timed metadata track of a coverage area. A sample (sample) in a track in the coverage area is 2D spatial location information of a spatial object corresponding to the media data, and the 2D location information may be location information defined in the existing ISO/IEC 23001-10 standard.

Alternatively, a value of reference_type is cvsp, and the semantic meaning indicates that media data is associated with a timed metadata track of a coverage area. A sample (sample) in a track in the coverage area is spatial location information that is of a spatial object corresponding to the media data and that is on a sphere, and the information on the sphere may be a sample that is in the timed metadata track on the sphere and that is defined in the existing ISO/IEC 23000-20 standard.

Alternatively, a value of reference_type is cv2p, and the semantic meaning indicates that media data is associated with a timed metadata track of a coverage area. A sample (sample) in a track in the coverage area is spatial location information that is of a spatial object corresponding to the media data and that is in a mapped image.

In a corresponding example, there may be the following processing manners of the client:
1. The client parses a track of media data to obtain a 'tref' box in the media track, where a track ID (which may be any non-zero integer) of the media data track is 1; and obtains, from the 'tref' box, a referenced track whose reference_type value is 'cv2d', 'cvsp', or 'cv2p', where a track ID (which may be any non-zero integer) of the track is 2.
2. The client determines, based on 'cv2d', that the track whose track ID is 2 describes 2D spatial location information of a spatial object corresponding to the media data; or determines, based on 'cvsp', that the track whose track ID is 2 describes spatial location information that is of a spatial object corresponding to the media data and that is on a sphere; or determines, based on 'cv2p', that the track whose track ID is 2 describes spatial location information that is of a spatial object corresponding to the media data and that is in a mapped image.
3. The client may determine, based on coverage information and a presentation capability of a device, whether all media content is presented or a part of media content is captured for presentation; or when a field of view of a user changes, determine how the user obtains data outside the field of view.

In an example, the track whose track ID is 2 is a spatial information description track in a coverage area, a sample entry type of the track indicates that a current timed metadata track is a spatial information description track in a coverage area, and a value of the sample entry type may be "cvvp" (coverage viewport).

In an example, media coverage information may be described by using an independent track, for example, may be described by using a timed metadata track whose sample entry type value is 'cvvp'. However, if the media coverage information is static (all frames in a video have same coverage information), a metadata track associated with coverage areas is not need. In this case, the media coverage information may be described in metadata of a media track (track ID=1). Specific description information is in 'covi' (coverage information box) in ISO/IEC 23000-20, and the box describes a shape of the coverage area on a sphere or a 2D plane.

In a possible implementation of the embodiments of the present invention, a value of a reference type describes a description manner of a reference relationship between a metadata track and a media data track that are of quality information.

In an example, a specific correspondence is shown in the following table:

**Table 2**

| Value of reference_type | Described reference relationship |
|---|---|
| r2dq | A track of metadata associated with media data is a track of quality information of spatial information, and a sample in the track describes quality information of a 2D spatial location of an ROI in a spatial object corresponding to the media data |
| risq | A track of metadata associated with media data is a track of quality information of spatial information, and a sample in the track describes quality information of a spatial location that is of an ROI in a spatial object corresponding to the media data and that is on a sphere |
| ri2p | A track of metadata associated with media data is a track of quality information of spatial information, and a sample in the track describes quality information of a spatial location that is of an ROI in a spatial object corresponding to the media data and that is in a mapped image |
| c2dq | A track of metadata associated with media data is a track of quality information of spatial information, and a sample in the track describes quality information of a 2D spatial location of a spatial object corresponding to the media data |
| cspq | A track of metadata associated with media data is a track of quality information of spatial information, and a sample in the track describes quality information of a spatial location that is of a spatial object corresponding to the media data and that is on a sphere |
| c2pq | A track of metadata associated with media data is a track of quality information of spatial information, and a sample in the track describes quality information of a spatial location that is of a spatial object corresponding to the media data and that is in a mapped image |

In a corresponding example, the client parses a track of the media data to obtain a reference_type value, where track ID=1, and the reference_type value in a 'tref' box is 'r2dq', 'risq', 'ri2p', 'c2dq', 'cspq', or 'c2pq', and then the client can learn that a metadata track of the quality information of a spatial region of the ROI exists or a metadata track describing quality of a video in a media content coverage area exists. If the client needs to obtain quality information of a current video, the client can parse the track corresponding to the quality information.

A type of metadata referenced by the track is clearly described in metadata in the track, so that parsing of tracks performed by the client is decoupled from each other, and complexity in an implementation procedure of the client is reduced.

### BRIEF DESCRIPTION OF DRAWINGS

To describe the technical solutions in the embodiments of the present invention more clearly, the following briefly describes the accompanying drawings required for describing the embodiments. Apparently, the accompanying drawings in the following description show merely some embodiments of the present invention, and a person of ordinary skill in the art may derive other drawings from these accompanying drawings without creative efforts.
FIG. 1 is a schematic structural diagram of an MPD of DASH standard that is used for system-layer video streaming media transmission;
FIG. 2 is a schematic diagram of a framework instance of DASH standard transmission used for system-layer video streaming media transmission;
FIG. 3 is a schematic diagram of bitstream segment switching according to an embodiment of the present invention;
FIG. 4 is a schematic diagram of a storage manner of a segment in bitstream data;
FIG. 5 is another schematic diagram of a storage manner of a segment in bitstream data;
FIG. 6 is a schematic diagram of a field of view corresponding to a field of view change;
FIG. 7 is another schematic diagram of a spatial relationship between spatial objects;
FIG. 8 is a schematic flowchart of a streaming media information processing method according to an embodiment of the present invention;
FIG. 9 is a schematic diagram of a relative location of a target spatial object in panoramic space;
FIG. 10 is a schematic diagram of a coordinate system according to an embodiment of the present invention;
FIG. 11 is a schematic diagram of another coordinate system according to an embodiment of the present invention;
FIG. 12 is a schematic diagram of another coordinate system according to an embodiment of the present invention;
FIG. 13 is a schematic flowchart of a streaming media information processing method according to an embodiment of the present invention;
FIG. 14 is a schematic diagram of a logical structure of a streaming media information processing apparatus according to an embodiment of the present invention;
FIG. 15 is a schematic diagram of a logical structure of a streaming media information processing apparatus according to an embodiment of the present invention;
FIG. 16 is a schematic diagram of a hardware structure of a computer device according to an embodiment of the present invention; and
FIG. 17 is a schematic diagram of a coverage area according to an embodiment of the present invention.

### DESCRIPTION OF EMBODIMENTS

The following clearly and completely describes the technical solutions in the embodiments of the present invention with reference to the accompanying drawings in the embodiments of the present invention.

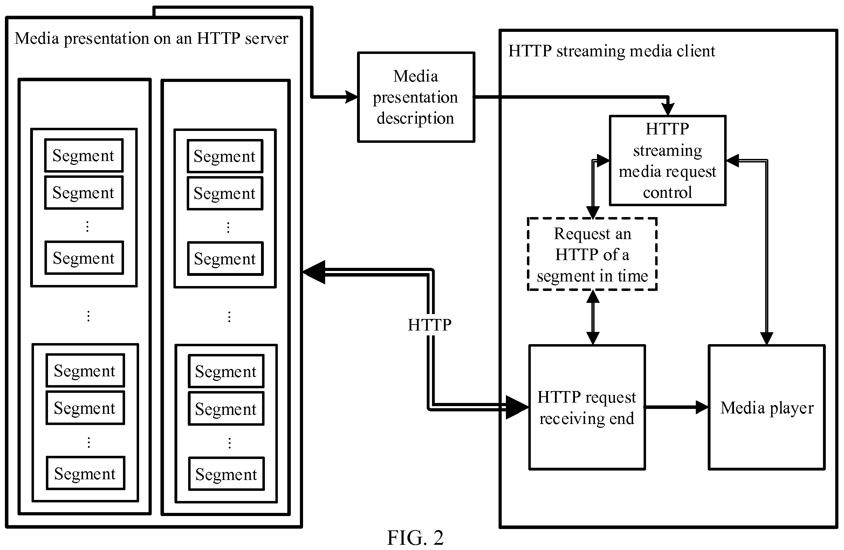

Currently, a DASH standard framework may be used in a client-oriented system-layer video streaming media transmission solution. FIG. 2 is a schematic diagram of a framework instance of DASH standard transmission used for system-layer video streaming media transmission, data transmission process of the system-layer video streaming media transmission solution includes two processes: a process in which a server end (for example, an HTTP server or a media content preparation server, which is referred to as a server below for short) generates media data for video content and responds to a request of a client, and a process in which the client (for example, an HTTP streaming media client) requests and obtains the media data from the server. The media data includes a media presentation description (English: Media Presentation Description, MPD) and a media bitstream (for example, a video bitstream that needs to be played). The MPD on the server includes a plurality of representations (also referred to as a representation, English: representation), and each representation describes a plurality of segments. An HTTP streaming media request control module of the client obtains the MPD sent by the server, and analyses the MPD to determine information that is about each segment of a video bitstream and that is described in the MPD, and further determine a segment that needs to be requested; sends a corresponding segment HTTP request to the server; and decodes and plays the segment by using a media player.
(1) In the process in which the server generates the media data for the video content, the media data generated by the server for the video content includes different versions of video bitstreams corresponding to same video content, and MPDs of the bitstreams. For example, the server generates, for a same episode of a TV series, a bitstream with a low resolution, a low bit rate, and a low frame rate (for example, a 360p resolution, a 300 kbps bit rate, and a 15 fps frame rate), a bitstream with a moderate resolution, a moderate bit rate, and a high frame rate (for example, a 720p resolution, a 1200 kbps bit rate, and a 25 fps frame rate), a bitstream with a high resolution, a high bit rate, and a high frame rate (for example, a 1080p resolution, a 3000 kbps bit rate, and a 25 fps frame rate), and the like.
   In addition, the server may further generate an MPD for the video content of the episode of the TV series. FIG. 1 is a schematic structural diagram of an MPD of a DASH standard in a system transmission solution. The MPD of the bitstream includes a plurality of periods (Period). For example, a part in which a period start equals to 100s in the MPD in FIG. 1 may include a plurality of adaptation sets (English: adaptation set), and each adaptation set may include a plurality of representations, such as a representation 1, a representation 2, .... Each representation describes one or more segments of the bitstream.
   In an embodiment of the present invention, each representation describes information about several segments (English: Segment) in a time sequence, for example, an initialization segment (English: Initialization segment), a media segment (Media Segment) 1, a media segment 2, ..., and a media segment 20. The representation may include segment information such as a play start moment, play duration, and a network storage address (for example, a network storage address represented in a form of a uniform resource locator (English: Universal Resource Locator, URL)).
(2) In the process in which the client requests and obtains the media data from the server, when a user chooses to play a video, the client obtains a corresponding MPD from the server based on video content played by the user on demand. The client sends, to the server based on a network storage address of a bitstream segment described in the MPD, a request for downloading the bitstream segment corresponding to the network storage address, and the server sends the bitstream segment to the client based on the received request. After obtaining the bitstream segment sent by the server, the client may perform operations by using the media player such as decoding and playing the bitstream segment.

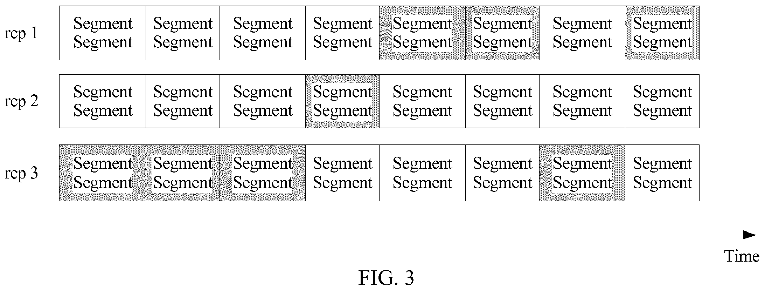

FIG. 3 is a schematic diagram of bitstream segment switching according to an embodiment of the present invention. A server may prepare three pieces of bitstream data of different versions for same video content (such as a movie), and use three representations in an MPD to describe the three pieces of bitstream data of different versions. It is assumed that the three representations (the representation is referred to as a rep below for short) may be a rep 1, a rep 2, a rep 3, and the like. The rep 1 is a high-definition video with a bit rate of 4 mbps (megabits per second), the rep 2 is a standard-definition video with a bit rate of 2 mbps, and the rep 3 is a normal video with a bit rate of 1 mbps. A segment in each rep includes a video bitstream of a time period, and segments included in different reps are aligned with each other in a same time period. To be specific, each rep describes segments in time periods in a time sequence, and segments in a same time period have a same length, so that switching may be performed between content of segments in different reps. As shown in the figure, a segment marked with a shadow in the figure is segment data requested by a client to play, and the first three segments requested by the client are segments in the rep 3. When requesting a fourth segment, the client may request a fourth segment in the rep 2, and then may switch to the fourth segment in the rep 2 for play after a third segment in the rep 3 is played. A play end point (which may be corresponding to a play end moment in terms of time) of the third segment in the rep 3 is a play start point (which may be corresponding to a play start moment in terms of time) of the fourth segment, and is also a play start point of a fourth segment in the rep 2 or the rep 1, so that segments in different reps are aligned with each other. After requesting the fourth segment in the rep 2, the client switches to the rep 1 to request a fifth segment, a sixth segment, and the like in the rep 1. Afterwards, the client may switch to the rep 3 to request a seventh segment in the rep 3, and then switch to the rep 1 to request an eighth segment in the rep 1. Segments in each rep may be stored in one file in a head-to-tail connection manner, or may be independently stored as small files. The segment may be encapsulated based on a format (an ISO BMFF (Base Media File Format)) in the ISO/IEC 14496-12 standard, or may be encapsulated based on a format (MPEG-2 TS) in ISO/IEC 13818-1. This may be specifically determined according to an actual application scenario requirement, and is not limited herein.

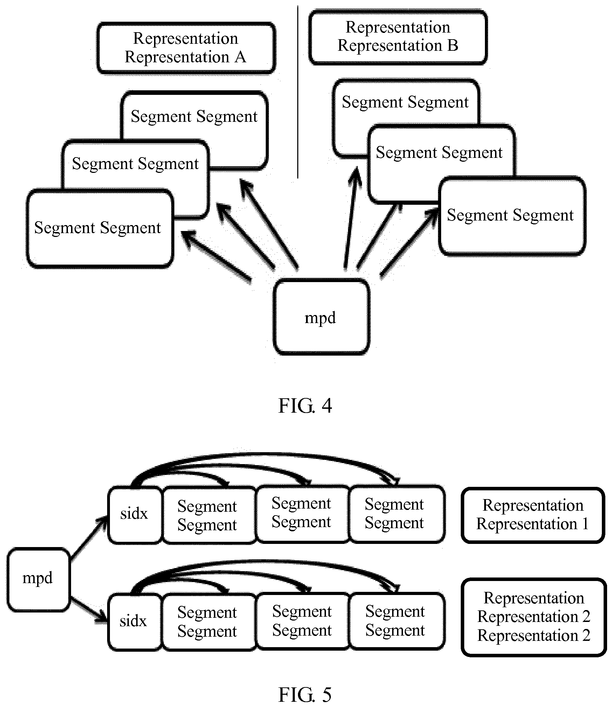

As mentioned in a DASH media file format, the segment may be stored in two manners: One is that each segment is separately and independently stored. FIG. 4 is a schematic diagram of a storage manner of a segment in bitstream data. The other is that all segments in a same rep are stored in one file. FIG. 5 is another schematic diagram of a storage manner of a segment in bitstream data. As shown in FIG. 4, each of segments in a rep A is separately stored as one file, and each of segments in a rep B is also separately stored as one file. Correspondingly, in the storage manner shown in FIG. 4, a server may use a form of a template or a form of a list to describe information such as a URL of each segment in an MPD of a bitstream. As shown in FIG. 5, all segments in the rep 1 are stored as one file, and all segments in the rep 2 are stored as one file. Correspondingly, in the storage method shown in FIG. 5, the server may use an index segment (English: index segment, that is, sidx in FIG. 5) in an MPD of a bitstream to describe related information of each segment. The index segment describes information such as a byte offset of each segment in a file storing the segment, a size of each segment, and duration (duration, also referred to as duration of each segment) of each segment.

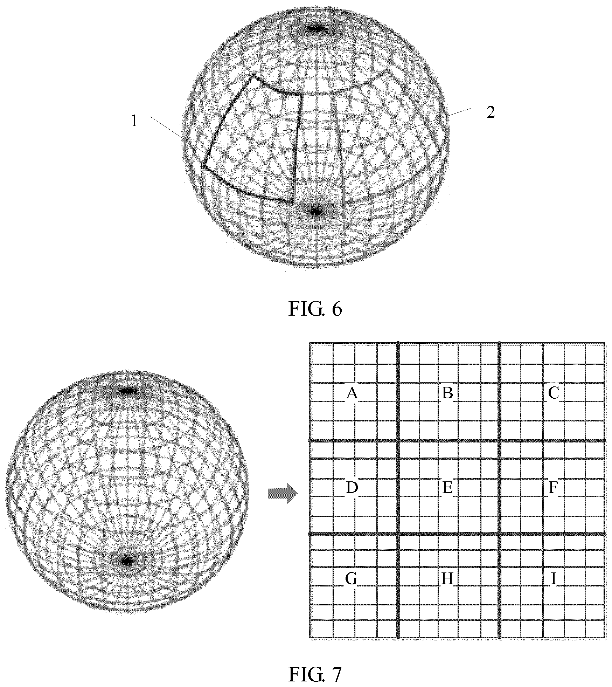

Currently, with increasing popularity of applications for viewing a VR video such as a 360-degree video, increasingly more users join a team of experiencing VR video viewing in a large field of view. This new video viewing application brings a new video viewing mode and visual experience for a user, and also brings a new technical challenge. In a process of viewing a video in a large field of view, such as 360 degrees (360 degrees are used as an example for description in this embodiment of the present invention), a spatial region (a spatial region may also be referred to as a spatial object) of a VR video is 360-degree panoramic space (or referred to as omnidirectional space, or referred to as a panoramic spatial object), and this exceeds a normal visual range of human eyes. Therefore, in a process of viewing the video, a user changes a viewing angle (that is, a field of view, FOV) at any time. The user views different video images when viewing different field of view, and therefore content presented in this video needs to change with a change of a field of view of the user. FIG. 6 is a schematic diagram of a field of view corresponding to a field of view change. A block 1 and a block 2 are respectively two different fields of view of a user. In a process of viewing a video, the user may switch a field of view for viewing the video from the block 1 to the block 2 by using an operation such as eye movement, head movement, or screen switching of a video viewing device. A video image viewed by the user when the field of view is the block 1 is a video image presented at a current moment by one or more spatial objects corresponding to the field of view. The field of view of the user is switched to the block 2 at a next moment. In this case, the video image viewed by the user should also be switched to a video image presented at this moment by a spatial object corresponding to the block 2.

In some feasible implementations, for output of a video image in a large 360-degree field of view, a server may divide panoramic space (or referred to as a panoramic spatial object) in a 360-degree field of view range to obtain a plurality of spatial objects. Each spatial object is corresponding to one sub-field of view of the user, and a plurality of sub-fields of view are spliced to form a complete human-eye observation field of view. In other words, a human-eye field of view (referred to as a field of view below for short) may be corresponding to one or more spatial objects obtained through division. The spatial objects corresponding to the field of view are all spatial objects corresponding to content objects in a human-eye field of view range. The human-eye observation field of view may dynamically change, but the field of view range usually may be 120 degrees×120 degrees. A spatial object corresponding to a content object in the human-eye field of view range of 120 degrees×120 degrees may include one or more spatial objects obtained through division, for example, a field of view 1 corresponding to the block 1 in FIG. 6, and a field of view 2 corresponding to the block 2. Further, a client may obtain, by using an MPD, spatial information of a video bitstream prepared by the server for each spatial object; and then may request, from the server according to a field of view requirement, a video bitstream segment corresponding to one or more spatial objects in a time period, and output a corresponding spatial object according to the field of view requirement. The client outputs, in a same time period, video bitstream segments corresponding to all spatial objects in the 360-degree field of view range, so as to output and display a complete video image in the time period in the entire 360-degree panoramic space.

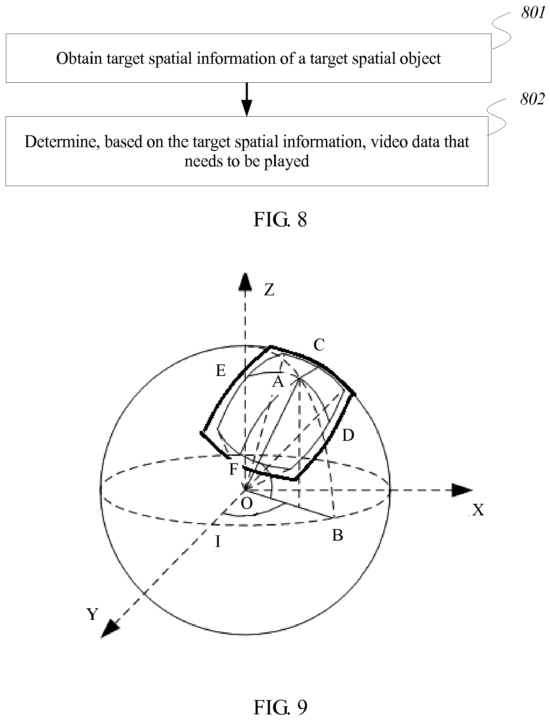

In specific implementation, during 360-degree spatial object division, the server may first map a sphere to a plane, and divide spatial objects on the plane. Specifically, the server may map the sphere to a longitude and latitude plan view in a longitude and latitude mapping manner. FIG. 7 is a schematic diagram of a spatial object according to an embodiment of the present invention. The server may map the sphere to the longitude and latitude plan view, and divide the longitude and latitude plan view into a plurality of spatial objects such as spatial objects A to I. Further, the server may map the sphere to a cube, and then expand a plurality of surfaces of the cube to obtain a plan view; or map the sphere to another polyhedron, and expand a plurality of surfaces of the polyhedron to obtain a plan view. The server may map the sphere to a plane view in more mapping manners. This may be specifically determined according to an actual application scenario requirement, and is not limited herein. Description is provided below with reference to FIG. 7 by using the longitude and latitude mapping manner as an example. As shown in FIG. 7, after dividing panoramic space of the sphere into the plurality of spatial objects such as spatial objects A to I, the server may prepare a group of DASH video bitstreams for each spatial object. Each spatial object is corresponding to one group of DASH video bitstreams. When a client user switches a field of view for viewing a video, the client may obtain, based on a new field of view selected by the user, a bitstream corresponding to a new spatial object, and then may present video content of the bitstream of the new spatial object in the new field of view. An information processing method and apparatus provided in the embodiments of the present invention are described below with reference to FIG. 8 to FIG. 10.

The DASH standard is used in a system-layer video streaming media transmission solution. To be specific, the client analyses an MPD, requests video data from the server on demand, and receives the data sent by the server, so as to implement video data transmission.

In some embodiments, when producing a video, a video producer (referred to as an author below for short) may design, according to a requirement of a story plot of the video, a main plot line for video play. In a video play process, a user can learn the story plot by viewing only a video image corresponding to the main plot line, and may or may not view another video image. Therefore, it may be learned that in the video play process, the client may selectively play a video image corresponding to the story plot, and may not present another video image, so as to save video data transmission resources and storage space resources, and improve video data processing efficiency. After designing the main story plot, the author may design, based on the main plot line, a video image that needs to be presented to the user at each play moment during video play, and the story plot of the main plot line may be obtained when the video images at all the play moments are concatenated in a time sequence. The video image that needs to be presented to the user at each play moment is a video image presented in a spatial object corresponding to the play moment, that is, a video image that needs to be presented by the spatial object at the moment. In specific implementation, a field of view corresponding to the video image that needs to be presented at each play moment may be set to a field of view of the author, and a spatial object that presents a video image in the field of view of the author may be set to a spatial object of the author. A bitstream corresponding to the object in the field of view of the author may be set to a bitstream of the field of view of the author. The bitstream of the field of view of the author includes video frame data of a plurality of video frames (encoded data of the plurality of video frames). When each video frame is presented, the video frame may be an image, that is, the bitstream of the field of view of the author is corresponding to a plurality of images. In the video play process, an image presented at each play moment in the field of view of the author is only a part of a panoramic image (or referred to as a VR image or an omnidirectional image) that needs to be presented in the entire video. At different play moments, spatial information of spatial objects associated with images corresponding to the video bitstreams of author may be different or may be the same, that is, spatial information of spatial objects associated with video data in the bitstream of the field of view of the author is different.

In some feasible implementations, after designing the field of view of the author at each play moment, the author may prepare a corresponding bitstream for the field of view of the author at each play moment by using the server. The bitstream corresponding to the field of view of the author may be set to a bitstream of the field of view of the author. The server may encode the bitstream of the field of view of the author and transmit an encoded bitstream to the client. After decoding the bitstream of the field of view of the author, the client may present, to the user, a story plot picture corresponding to the bitstream of the field of view of the author. The server does not need to transmit, to the client, a bitstream of a field of view (which is set to a non-author field of view, that is, a bitstream of a static field of view) other than the field of view of author, so as to save resources such as video data transmission bandwidth.

In some feasible implementations, an image of a preset spatial object is presented in the field of view of the author based on the story plot designed by the author for the video, and spatial objects of the author at different play moments may be different or may be the same. Therefore, it may be learned that the field of view of the author is a field of view constantly changes with a play moment, and the spatial object of the author is a dynamic spatial object whose location constantly changes, that is, not all locations of spatial objects of the author that are corresponding to all the play moments are the same in the panoramic space. Each spatial object shown in FIG. 7 is a spatial object obtained through division according to a preset rule, and is a spatial object whose relative position is fixed in the panoramic space. A spatial object of the author corresponding to any play moment is not necessarily one of fixed spatial objects shown in FIG. 7, but is a spatial object whose relative position constantly changes in the global space. Content, presented in the video, obtained by the client from the server is concatenation of fields of view of the author, and does not include a spatial object corresponding to a non-author field of view. The bitstream of the field of view of the author includes only content of the spatial object of the author, and an MPD obtained from the server does not include spatial information of the spatial object of the author in the field of view of the author. In this case, the client can decode and present only the bitstream of the field of view of the author. If the user switches a field of view for viewing the video to a non-author field of view in the video viewing process, the client cannot present corresponding video content to the user.

In some embodiments, when generating a media presentation description, the server may add identification information to the media presentation description, to identify a bitstream that is of the video and that is in the field of view of the author, that is, the bitstream of the field of view of the author. In specific implementation, the identification information may be carried in attribute information that is carried in the media presentation description and that is of a bitstream set in which the bitstream of the field of view of the author is located. To be specific, the identification information may be carried in information about an adaptation set in the media presentation description, or the identification information may be carried in information about a representation included in the media presentation description. Further, the identification information may be carried in information about a descriptor in the media presentation description. The client can quickly identify the bitstream of the field of view of the author and a bitstream of the non-author field of view by parsing the MPD to obtain an added syntax element in the MPD. If spatial information related to the bitstream of the field of view of the author is encapsulated in an independent metadata file, the client may obtain metadata of the spatial information based on a codec identifier by parsing the MPD, so as to parse out the spatial information.

In some embodiments, the server may further add spatial information of one or more spatial objects of the author to the bitstream of the field of view of the author. Each spatial object of the author is corresponding to one or more images, that is, one or more images may be associated with a same spatial object, or each image may be associated with one spatial object. The server may add spatial information of each spatial object of the author to the bitstream of the field of view of the author, so that the server may use the spatial information as a sample, and separately encapsulate the spatial information in a track or a file. Spatial information of a spatial object of the author is a spatial relationship between the spatial object of the author and a content component associated with the spatial object of the author, that is, a spatial relationship between the spatial object of the author and the panoramic space. To be specific, space described by the spatial information of the spatial object of the author may be specifically a part of the panoramic space, for example, any spatial object in FIG. 7. In specific implementation, for a DASH bitstream, the server may add the spatial information to a trun box or a tfhd box that is in an existing file format and that is included in a segment of the bitstream of the field of view of the author, so as to describe spatial information of a spatial object associated with each frame of image corresponding to video frame data in the bitstream of the field of view of the author.

Further, because there may be same information between the spatial information of the spatial objects associated with all the image frames, a repetition and redundancy exist in spatial information of a plurality of spatial objects of the author, and consequently data transmission efficiency is affected.

In the embodiments of the present invention, a video file format (English: file format) provided in the DASH standard is modified, so as to reduce the repetition and redundancy existing in the spatial information of the plurality of spatial objects of the author.

The file format modification provided in the present invention may also be applied to a file format of ISOBMFF or MPEG2-TS. This may be specifically determined according to an actual application scenario requirement, and is not limited herein.

FIG. 8 is a schematic flowchart of a streaming media information processing method according to an embodiment of the present invention. The streaming media information processing method provided in this embodiment of the present invention may be applied to the DASH field, and may also be applied to another streaming media field, for example, RTP protocol-based streaming media transmission. An execution body of the method may be a client, and may be specifically a terminal, user equipment, or a computer device, or may be a network device such as a gateway or a proxy server. As shown in FIG. 8, the method may include the following steps:
S801. Obtain target spatial information of a target spatial object, where the target spatial object is one of two spatial objects, the two spatial objects are associated with data of two images that is included in target video data, the target spatial information includes same-attribute spatial information, the same-attribute spatial information includes same information between respective spatial information of the two spatial objects, and spatial information of a spatial object other than the target spatial object in the two spatial objects includes the same-attribute spatial information.

The target video data may be a target video bitstream, or may be unencoded video data. When the target video data is the target video bitstream, the data of the two images may be encoded data of the two images. Further, the target video bitstream may be a bitstream of a field of view of an author, or may be a bitstream of a non-author field of view.

Obtaining the target spatial information of the target spatial object may be receiving the target spatial information from a server.

The two images may be in a one-to-one correspondence with the two spatial objects, or one spatial object may be corresponding to two images.

Spatial information of a target spatial object is a spatial relationship between the target spatial object and a content component associated with the target spatial object, that is, a spatial relationship between the target spatial object and panoramic space. To be specific, space described by the target spatial information of the target spatial object may be specifically a part of the panoramic space. The target video data may be the bitstream of the field of view of the author, or may be the bitstream of the non-author field of view. The target spatial object may or may not be the spatial object of the author.

S802. Determine, based on the target spatial information, video data that needs to be played.

Further, after the video data that needs to be played is determined, the video data that needs to be played may be further displayed.

In some embodiments, the target spatial information may further include different-attribute spatial information of the target spatial object, the spatial information of the other spatial object further includes different-attribute spatial information of the other spatial object, and the different-attribute spatial information of the target spatial object is different from the different-attribute information of the other spatial object.

In a possible implementation of the target spatial information, the target spatial information may include location information of a central point of the target spatial object or location information of an upper-left point of the target spatial object, and the target spatial information may further include a width of the target spatial object and a height of the target spatial object.

When a coordinate system corresponding to the target spatial information is an angular coordinate system, the target spatial information may be described by using a yaw angle; or when a coordinate system corresponding to the target spatial information is a pixel coordinate system, the target spatial information may be described by using a spatial location in a longitude and latitude graph, or by using another geometric solid graph. This is not limited herein. The target spatial information is described by using a yaw angle, for example, a pitch angle θ (pitch), a yaw angle ψ (yaw), a roll angle Φ (roll), a width used to represent an angle range, and a height used to represent an angle range. FIG. 9 is a schematic diagram of a relative location of a central point of a target spatial object in panoramic space. In FIG. 9, a point O is a sphere center corresponding to a spherical image of a 360-degree VR panoramic video, and may be considered as a location of a human eye during viewing of a VR panoramic image. A point A is the central point of the target spatial object, C and F are boundary points along a horizontal coordinate axis of the target spatial object that pass through the point A in the target spatial object, E and D are boundary points along a vertical coordinate axis of the target spatial object that pass through the point A in the target spatial object, B is a point that is on an equatorial line and that is projected from the point A along a spherical meridian, and I is a start coordinate point in a horizontal direction on the equatorial line. Meanings of elements are explained below:
A pitch angle is a deflection angle, in a vertical direction, of a point that is on a panoramic sphere (that is, global space) image and to which a center position of an image of the target spatial object is mapped, such as ∠ AOB in FIG. 9.

A yaw angle is a deflection angle, in a horizontal direction, of the point that is on the panoramic spherical image and to which the center position of the image of the target spatial object is mapped, such as ∠ IOB in FIG. 9.

A roll angle is a rotation angle in a direction in which the sphere center is connected to a point that is on the panoramic spherical image and to which the center position of the image of the spatial object, such as ∠ DOB in FIG. 9.

A height used to represent an angle range (a height of the target spatial object in an angular coordinate system) is a height of a field of view of the image that is of the target spatial object and that is in the panoramic spherical image, and is represented by a maximum angle of the field of view in a vertical direction, such as ∠ DOE in FIG. 9. A width used to represent an angle range (a width of the target spatial object in an angular coordinate system) is a width of the field of view of the image that is of the target spatial object and that is in the panoramic spherical image, and is represented by a maximum angle of the field of view in a horizontal direction, such as ∠ COF in FIG. 9.

In another possible implementation of the target spatial information, the target spatial information may include location information of an upper-left point of the target spatial object and location information of a lower-right point of the target spatial object.

In another possible implementation of the target spatial information, when the target spatial object is not a rectangle, the target spatial information may include at least one of a shape type, a radius, and a circumference of the target spatial object.

In some embodiments, the target spatial information may include spatial rotation information of the target spatial object.

In some embodiments, the target spatial information may be encapsulated in spatial information data or a spatial information track (track), the spatial information data may be a bitstream of the target video data, metadata of the target video data, or a file independent of the target video data, and the spatial information track may be a track independent of the target video data.

The spatial information data or the spatial information track may further include a spatial information type identifier used to indicate a type of the same-attribute spatial information, and the spatial information type identifier is used to indicate information that is in the target spatial information and that belongs to the same-attribute spatial information.

When the spatial information type identifier indicates that the target spatial information has no information belonging to the same-attribute spatial information, the same-attribute spatial information may include a minimum value of the width of the target spatial object, a minimum value of the height of the target spatial object, a maximum value of the width of the target spatial object, and a maximum value of the height of the target spatial object.

The spatial information type identifier and the same-attribute spatial information may be encapsulated in a same box.

In specific implementation, when the target spatial information is encapsulated in a file (a spatial information file) independent of the target video data or a track (a spatial information track) independent of the target video data, the server may add the same-attribute spatial information to a 3dsc box in an existing file format, and add the different-attribute spatial information of the target spatial object to an mdat box in the existing file format.

### Example (Example 1) of adding the spatial information:

```
            aligned(8) class 3DSphericalCoordinatesSampleEntry//the same-attribute
 spatial information
            extends MetadataSampleEntry ('3dsc') {
             unsigned int(2) regionType; //the spatial information type
             identifier
            if (regionType ==0) { //the spatial information type identifier is 0
               unsigned int(16) yaw; //the yaw angle
          unsigned int(16) pitch; //the pitch angle
              unsigned int(16) roll; //the roll angle
              unsigned int(16) reference_width;//the width of the target spatial
 object
              unsigned int(16) reference_height;//the height of the target spatial
 object }
            If (regionType ==1) { //the spatial information type identifier is 1
                unsigned int(16) reference_width; //the width of the target spatial
 object
                unsigned int(16) reference_height; //the height of the target
 spatial object }
            If (regionType ==2) { //the spatial information type identifier is 2
                unsigned int(16) min_reference_width;//the minimum value of
                the width of the target spatial object
                unsigned int(16) min_reference_height;//the minimum value of
                the height of the target spatial object
                unsigned int(16) max_reference_width;//the maximum value of
                the width of the target spatial object
                unsigned int(16) max_reference_height;//the maximum value of
                the height of the target spatial object
            }
          } aligned(8) class SphericalCoordinatesSample() { //the
 different-attribute spatial information of the target spatial object
            if ((regionType ==1) {
                unsigned int(16) yaw;
                unsigned int(16) pitch;
                unsigned int(16) roll; }
            if ((regionType ==2) {
                unsigned int(16) yaw;
                unsigned int(16) pitch;
                unsigned int(16) roll;
                unsigned int(16) reference_width;
                unsigned int(16) reference_height;
          } }
```

In this example, the same-attribute spatial information may be some instead of all of a yaw, a pitch, a roll, reference_width, and reference_height, for example, the same-attribute spatial information has no roll. Roll may belong to the different-attribute spatial information of the target spatial object, and may not be included in the target spatial information. The spatial information type identifier regionType is further added to the 3dsc box. This example is an example in a case of an angular coordinate system. When the spatial information type identifier is 0, the spatial information type identifier is used to indicate that the information that is in the target spatial information and that belongs to the same-attribute spatial information is the location information of the central point of the target spatial object or the location information of the upper-left point of the target spatial object, the width of the target spatial object, and the height of the target spatial object. In this example, the location information is represented by a pitch angle θ (pitch), a yaw angle ψ (yaw), and a roll angle Φ (roll), and the width and the height each may also be represented by an angle. In other words, it is understood that when the spatial information type identifier is 0, the two spatial objects have both a same location and a same size (including but not limited to a width and a height).

When the spatial information type identifier is 1, the spatial information type identifier is used to indicate that the information that is in the target spatial information and that belongs to the same-attribute spatial information is the width of the target spatial object and the height of the target spatial object. In other words, it is understood that when the spatial information type identifier is 1, the two spatial objects have a same size (including but not limited to a width and a height) but different locations.

When the spatial information type identifier is 2, the spatial information type identifier is used to indicate that the target spatial information has no information belonging to the same-attribute spatial information. In other words, it is understood that when the spatial information type identifier is 2, the two spatial objects have different sizes and locations.

Correspondingly, when the spatial information type identifier is 0, it may be indicated that no different-attribute spatial information exists. When the spatial information type identifier is 1, the spatial information type identifier further indicates that the different-attribute spatial information of the target spatial object is the location information of the central point of the target spatial object or the location information of the upper-left point of the target spatial object. When the spatial information type identifier is 2, the spatial information type identifier further indicates that the different-attribute spatial information of the target spatial object is the location information of the central point of the target spatial object or the location information of the upper-left point of the target spatial object, the width of the target spatial object, and the height of the target spatial object.

### Example (Example 2) of adding the spatial information:

```
aligned(8) class 3DSphericalCoordinatesSampleEntry//the same-attribute
 spatial information
            extends MetadataSampleEntry ('3dsc') {
             unsigned int(2) regionType; //the spatial information type identifier
            if (regionType ==0) {//the spatial information type identifier is 0
               unsigned int(16) top_left_x;//a horizontal coordinate of the
               upper-left point
              unsigned int(16) top_left_y;//a vertical coordinate of the upper-left
              point
          unsigned int(16) reference_width;//the width of the target spatial
 object
          unsigned int(16) reference_height;//the height of the target spatial
 object
            }
            If (regionType ==1) {//the spatial information type identifier is 1
                unsigned int(16) reference_width;//the width of the target spatial
 object
                unsigned int(16) reference_height;//the height of the target spatial
 object }
            If (regionType ==2) {//the spatial information type identifier is 2
          unsigned int(16) min_reference_width;//the minimum value of the
          width of the target spatial object
                unsigned int(16) min_reference_height;//the minimum value of
                the height of the target spatial object
                unsigned int(16) max_reference_width;//the maximum value of
                the width of the target spatial object
                unsigned int(16) max_reference_height;//the maximum value of
                the height of the target spatial object }
          }
            aligned(8) class SphericalCoordinatesSample() {//the different-attribute
 spatial information of the target spatial object
            if ((regionType ==1) {
                unsigned int(16) top_left_x; //the horizontal coordinate of the
                upper-left point
                unsigned int(16) top_left_y; //the vertical coordinate of the
                upper-left point
            }
            if ((regionType ==2) {
                unsigned int(16) top_left_x; //the horizontal coordinate of the
                upper-left point
                unsigned int(16) top_left_y; //the vertical coordinate of the
                upper-left point
                unsigned int(16) reference_width;//the width of the target spatial
 object
                unsigned int(16) reference_height;//the height of the target spatial
 object }
          }
```

This example is an example in a case of a pixel coordinate system. When the spatial information type identifier is 0, the spatial information type identifier is used to indicate that the information that is in the target spatial information and that belongs to the same-attribute spatial information is the location information of the upper-left point of the target spatial object, the width of the target spatial object, and the height of the target spatial object. In this example, the location information is represented by a horizontal coordinate in a unit of a pixel and a vertical coordinate in a unit of a pixel, and the width and the height each are also represented in a unit of a pixel. The horizontal coordinate and the vertical coordinate may be coordinates of a location point in the longitude and latitude plan view in FIG. 7, or may be coordinates of a location point in the panoramic space (or a panoramic spatial object). In other words, it is understood that when the spatial information type identifier is 0, the two spatial objects have both a same location and a same size. It should be noted that the location information of the upper-left point of the target spatial object may be replaced with the location information of the central point of the target spatial object.

When the spatial information type identifier is 1, the spatial information type identifier is used to indicate that the information that is in the target spatial information and that belongs to the same-attribute spatial information is the width of the target spatial object and the height of the target spatial object. In other words, it is understood that when the spatial information type identifier is 1, the two spatial objects have a same size but different locations.

When the spatial information type identifier is 2, the spatial information type identifier is used to indicate that the target spatial information has no information belonging to the same-attribute spatial information. In other words, it is understood that when the spatial information type identifier is 2, the two spatial objects have different sizes and locations.

Correspondingly, when the spatial information type identifier is 0, it may be indicated that no different-attribute spatial information exists. When the spatial information type identifier is 1, the spatial information type identifier further indicates that the different-attribute spatial information of the target spatial object is the location information of the upper-left point of the target spatial object. When the spatial information type identifier is 2, the spatial information type identifier further indicates that the different-attribute spatial information of the target spatial object is the location information of the upper-left point of the target spatial object, the width of the target spatial object, and the height of the target spatial object. It should be noted that the location information of the upper-left point of the target spatial object may be replaced with the location information of the central point of the target spatial object.

### Example (Example 3) of adding the spatial information:

```
          aligned(8) class 3DSphericalCoordinatesSampleEntry//the same-attribute
 spatial information
            extends MetadataSampleEntry ('3dsc') {
             unsigned int(2) regionType; //the spatial information type identifier
            if (regionType ==0) {//the spatial information type identifier is 0
               unsigned int(16) top_left_x;//a horizontal coordinate of the
               upper-left point
              unsigned int(16) top_left_y;//a vertical coordinate of the upper-left
              point
          unsigned int(16) down_right_x;//a horizontal coordinate of the
 lower-right point
              unsigned int(16) down_right_y;//a vertical coordinate of the
 lower-right point
            }
            If (regionType ==1) {//the spatial information type identifier is 1
                unsigned int(16) down_right_x;//the horizontal coordinate of the
 lower-right point
                unsigned int(16) down_right_y;//the vertical coordinate of the
 lower-right point
            }
            If (regionType ==2) {//the spatial information type identifier is 2
          unsigned int(16) min_reference_width;//the minimum value of the
          width of the target spatial object
                unsigned int(16) min_reference_height;//the minimum value of
                the height of the target spatial object
                unsigned int(16) max_reference_width;//the maximum value of
                the width of the target spatial object
                unsigned int(16) max_reference_height;//the maximum value of
                the height of the target spatial object}
          } aligned(8) class SphericalCoordinatesSample() {//the different-attribute
 spatial information of the target spatial object
            if ((regionType ==1) {
                unsigned int(16) top_left_x; //the horizontal coordinate of the
                upper-left point
                unsigned int(16) top_left_y; //the vertical coordinate of the
                upper-left point
            }
            if ((regionType ==2) {
                unsigned int(16) top_left_x; //the horizontal coordinate of the
                upper-left point
                unsigned int(16) top_left_y; //the vertical coordinate of the
                upper-left point
                unsigned int(16) down_right_x;//the horizontal coordinate of the
 lower-right point
                unsigned int(16) down_right_y;//the vertical coordinate of the
 lower-right point
            }
          }
```

This example is an example in a case of a pixel coordinate system. When the spatial information type identifier is 0, the spatial information type identifier is used to indicate that the information that is in the target spatial information and that belongs to the same-attribute spatial information is the location information of the upper-left point of the target spatial object and the location information of the lower-right point of the target spatial object. In this example, the location information is represented by a horizontal coordinate in a unit of a pixel and a vertical coordinate in a unit of a pixel. The horizontal coordinate and the vertical coordinate may be coordinates of a location point in the longitude and latitude plan view in FIG. 7, or may be coordinates of a location point in the panoramic space (or a panoramic spatial object). In other words, it is understood that when the spatial information type identifier is 0, the two spatial objects have both a same location and a same size. It should be noted that the location information of the lower-right point of the target spatial object may be replaced with the height and the width of the target spatial object.

When the spatial information type identifier is 1, the spatial information type identifier is used to indicate that the information that is in the target spatial information and that belongs to the same-attribute spatial information is the location information of the lower-right point of the target spatial object. In other words, it is understood that when the spatial information type identifier is 1, the two spatial objects have a same size but different locations. It should be noted that the location information of the lower-right point of the target spatial object may be replaced with the height and the width of the target spatial object.

When the spatial information type identifier is 2, the spatial information type identifier is used to indicate that the target spatial information has no information belonging to the same-attribute spatial information. In other words, it is understood that when the spatial information type identifier is 2, the two spatial objects have different sizes and locations.

Correspondingly, when the spatial information type identifier is 0, it may be indicated that no different-attribute spatial information exists. When the spatial information type identifier is 1, the spatial information type identifier further indicates that the different-attribute spatial information of the target spatial object is the location information of the upper-left point of the target spatial object. When the spatial information type identifier is 2, the spatial information type identifier further indicates that the different-attribute spatial information of the target spatial object is the location information of the upper-left point of the target spatial object and the location information of the lower-right point of the target spatial object. It should be noted that the location information of the lower-right point of the target spatial object may be replaced with the height and the width of the target spatial object.

In some embodiments, the spatial information data or the spatial information track may further include a coordinate system identifier used to indicate a coordinate system corresponding to the target spatial information, and the coordinate system is a pixel coordinate system or an angular coordinate system.

The coordinate system identifier and the same-attribute spatial information may be encapsulated in a same box.

In specific implementation, when the target spatial information is encapsulated in a file (a spatial information file) independent of the target video data or a track (a spatial information track) independent of the target video data, the server may add the coordinate system identifier to a 3dsc box in an existing file format.

### Example (Example 1) of adding the coordinate system identifier:

```
          aligned(8) class 3DSphericalCoordinatesSampleEntry//the same-attribute
 spatial information
            extends MetadataSampleEntry ('3dsc') { ......
          unsigned int(2) Coordinate_ system;//the coordinate system identifier
          ...... }
```

In this example, when the coordinate system identifier coordinate_system is 0, the coordinate system is an angular coordinate system. When the coordinate system identifier is 1, the coordinate system is a pixel coordinate system.

In some embodiments, the spatial information data or the spatial information track may further include a spatial rotation information identifier, and the spatial rotation information identifier is used to indicate whether the target spatial information includes the spatial rotation information of the target spatial object.

The spatial rotation information identifier and the same-attribute spatial information may be encapsulated in a same box (for example, a 3dsc box), or the spatial rotation information identifier and the different-attribute spatial information of the target spatial object may be encapsulated in a same box (for example, an mdat box). Specifically, in a case in which the spatial rotation information identifier and different-attribute spatial information of the target spatial object are encapsulated in a same box, when the spatial rotation information identifier indicates that the target spatial information includes the spatial rotation information of the target spatial object, the different-attribute spatial information of the target spatial object includes the spatial rotation information.

In specific implementation, the server may encapsulate the spatial rotation information identifier and the different-attribute spatial information of the target spatial object in a same box (for example, an mdat box). Further, the server may encapsulate the spatial rotation information identifier and the different-attribute spatial information of the target spatial object in a same sample in the same box. One sample can encapsulate different-attribute information corresponding to one spatial object.

### Example (Example 1) of adding the spatial rotation information identifier:

```
            aligned(8) class SphericalCoordinatesSample(){
          unsigned int(1) rotation_flag;//the spatial rotation information identifier,
          where 0 indicates that there is no rotation, and 1 indicates that rotation exists
          if(rotation_flag == 1)
           {
          unsigned int(16) rotation_degree;//the spatial rotation information of the
          target spatial object
          } ......
          }
```

In some embodiments, the same-attribute spatial information and the different-attribute spatial information of the target spatial object may be encapsulated in track metadata (track metadata) of spatial information of a video, for example, may be encapsulated in a same box such as a trun box, a tfhd box, or a new box.

### Example (Example 4) of adding the spatial information:

```
          syntax (syntax) of a trun box, a tfhd box, or a new box
             unsigned int(2) regionType; //the spatial information type identifier
            if (regionType ==0){//the spatial information type identifier is 0
               ......//the same-attribute spatial information is the same as the
 same-attribute spatial information existing when the spatial information type identifier
 is 0 in the foregoing embodiment
            }
            If (regionType ==1) {//the spatial information type identifier is 1
                ......//the same-attribute spatial information is the same as the
 same-attribute spatial information existing when the spatial information type identifier
 is 1 in the foregoing embodiment
            }
            If (regionType ==2) {//the spatial information type identifier is 2
          ......//the same-attribute spatial information is the same as the
 same-attribute spatial information existing when the spatial information type identifier
 is 2 in the foregoing embodiment
          }
          unsigned int(32) samplecount;//sample quantity
          for (i=1;i<= samplecount;i++)
            If (regionType ==1) {//the spatial information type identifier is 1
                ......//the different-attribute spatial information is the same as the
 different-attribute spatial information that is of the target spatial object and that exists
 when the spatial information type identifier is 1 in the foregoing embodiment
            }
            If (regionType ==2) {//the spatial information type identifier is 2
          ......//the different-attribute spatial information is the same as the
 different-attribute spatial information that is of the target spatial object and that exists
 when the spatial information type identifier is 2 in the foregoing embodiment
          }
          }
```

One piece of spatial information of one spatial object is one sample, the foregoing sample quantity is used to indicate a quantity of spatial objects, and each spatial object is corresponding to one group of different-attribute spatial information. An implementation of the streaming media information processing method provided in this embodiment of the present invention includes the following steps.
1. A spatial information file, a spatial information track (the spatial information may be referred to as timed metadata), or spatial information metadata of a video (or referred to as metadata of the target video data) is obtained.
2. The spatial information file or the spatial information track is parsed.
3. A box (spatial information description box) whose tag is 3dsc is obtained through parsing, and the spatial information type identifier is parsed. The spatial information type identifier may be used to indicate spatial object types of the two spatial objects. An optional spatial object type may include but is not limited to: a spatial object whose location and size remain unchanged, a spatial object whose location changes and whose size remains unchanged, a spatial object whose location remains unchanged and whose size changes, and a spatial object whose location and size both change.
4. If a spatial object type obtained through parsing is a spatial object whose location and size remain unchanged, the same-attribute spatial information obtained through parsing in the 3dsc box may be used as the target spatial information, where the spatial object whose location and size remain unchanged means that a spatial location of the spatial object and a spatial size of the spatial object remain unchanged. The spatial object type indicates that all spatial information of the two spatial objects is the same, and a value of the spatial information is identical to that of the same-attribute spatial information obtained through parsing. If the same-attribute spatial information is this type of same-attribute spatial information, in subsequent parsing, a box in which the different-attribute spatial information of the target spatial object is located does not need to be parsed.
5. If a spatial object type obtained through parsing is a spatial object whose location changes and whose size remains unchanged, same-attribute spatial information in the 3dsc box carries size information of the spatial object, for example, a height and a width of the spatial object. In this case, information carried in the different-attribute spatial information that is of the target spatial object and that is obtained through subsequent parsing is location information of each spatial object.
6. If a spatial object type obtained through parsing is a spatial object whose location and size both change, information carried in the different-attribute spatial information that is of the target spatial object and that is obtained through subsequent parsing is location information (for example, location information of a central point) of each spatial object and size information of the spatial object, for example, a height and a width of the spatial object.
7. After the target spatial information is obtained through parsing, a content object that needs to be presented is selected from an obtained VR video based on a spatial object (the target spatial object) described in the target spatial information; or video data corresponding to a spatial object described in the target spatial information is requested for decoding and presentation; or a location of currently viewed video content in VR video space (or referred to as panoramic space) is determined based on the target spatial information.

In some embodiments, a manner of carrying the spatial information may be described by adding a carrying manner identifier (carryType) to an MPD. For example, carrying manner may be that: the spatial information is carried in a spatial information file, a spatial information track, or metadata of the target video data.

An essential attribute (EssentialProperty) descriptor or supplemental attribute (SupplementalProperty) descriptor of the MPD is used as an example:

**Syntax table: EssentialProperty@value and/or SupplementalProperty@value attributes for the scheme**

| EssentialProperty@value or SupplementalProperty@value parameter | Use | Description |
|---|---|---|
| source_id | M | Source identifier |
| carryType | M | Describe a manner of carrying spatial information metadata |
| | | 0: Carried in metadata of the target video data |
| | | 1: Carried in a spatial information track |

or

**Syntax table: EssentialProperty@value and/or SupplementalProperty@value attributes for the scheme**

| EssentialProperty@value or SupplementalProperty@value parameter | Use | Description |
|---|---|---|
| source_id | M | Source identifier |
| carryType | M | Describe a manner of carrying spatial information metadata |
| | | 0: Carried in metadata of the target video data |
| | | 1: Carried in a spatial information track |
| | | 2: Carried in a spatial information file |

A specific MPD example is shown below:

### Example 1: The spatial information is carried in metadata of the target video data

```
          <?xml version="1.0" encoding="UTF-8"?>
 <MPD
  xmlns="urn:mpeg:dash:schema:mpd:2011"
  type="static"
  mediaPresentationDuration="PT 1 0S"
  minBufferTime="PT1S"
  profiles="urn:mpeg:dash:profile:isoff-on-demand:2011">
  <Period>
               <!-the spatial information is carried in metadata of the target video
 data-->
               <AdaptationSet segmentAlignment="true"
 subsegmentAlignment="true" subsegmentStartsWithSAP="1">
                 <EssentialProperty schemeIdUri="urn:mpeg:dash:xxx:2016"
                  value="1,0"/>
                 <Representation id="zoomed" mimeType="video/mp4"
 codecs="avc1.42c01e" bandwidth="5000000" width="1920" height="1080">
                   <BaseURL>video.mp4</BaseURL>
                 </Representation>
     </AdaptationSet>
 </Period>
 </MPD>
```

In this example, value="1, 0", where 1 is the source identifier, and 0 indicates that the spatial information is carried in metadata (or referred to as the metadata of the target video data) in a track of the target video data.

### Example 2: The spatial information is carried in a spatial information track

```
          <?xml version="1.0" encoding="UTF-8"?>
 <MPD
  xmlns="urn:mpeg:dash:schema:mpd:2011"
  type="static"
  mediaPresentationDuration="PT10S"
  minBufferTime="PT1S"
  profiles="urn:mpeg:dash:profile:isoff-on-demand:2011">
  <Period>
               <!-the spatial information is carried in a spatial information track,
 and the spatial information track and the target video data are in a same file-->
               <AdaptationSet segmentAlignment="true"
 subsegmentAlignment="true" subsegmentStartsWithSAP="1">
                 <EssentialProperty schemeIdUri="urn:mpeg:dash:xxx:2016"
                  value="1,1"/>
                 <Representation id="zoomed" mimeType="video/mp4"
 codecs="avc1.42c01e" bandwidth="5000000" width="1920" height="1080">
                   <BaseURL>video.mp4</BaseURL>
                 </Representation>
     </AdaptationSet>
 </Period>
 </MPD>
```

In this example, value="1, 1", where 1 is the source identifier, and 1 indicates that the spatial information is carried in an independent spatial information track.

### Example 3: The spatial information is carried in an independent spatial information file

```
          <?xml version="1.0" encoding="UTF-8"?>
 <MPD
  xmlns="urn:mpeg:dash:schema:mpd:2011"
  type="static"
  mediaPresentationDuration="PT10S"
  minBufferTime="PT1S"
  profiles="urn:mpeg:dash:profile:isoff-on-demand:2011">
  <Period>
               <!-the spatial information is carried in an independent spatial
               information file-->
               <AdaptationSet segmentAlignment="true"
 subsegmentAlignment="true" subsegmentStartsWithSAP="1 ">
                 <EssentialProperty schemeIdUri="urn:mpeg:dash:xxx:2016"
                  value="1,2"/>
                 <Representation id="zoomed" mimeType="video/mp4"
 codecs="avc1.42c01e" bandwidth="5000000" width="1920" height="1080">
                   <BaseURL>video.mp4</BaseURL>
                 </Representation>
     </AdaptationSet>
          <!-spatial information file-->
               <AdaptationSet segmentAlignment="true"
 subsegmentAlignment="true" subsegmentStartsWithSAP="1">
       <Representation id="roi-coordinates" associationId="zoomed"
 associationType="cdsc" codecs="2dcc" bandwidth="100">
                   <BaseURL>roi_coordinates.mp4</BaseURL>
                 </Representation>
     </AdaptationSet>
             </Period>
 </MPD>
```

In this example, value="1, 2", where 1 is the source identifier, and 2 indicates that the spatial information is carried in an independent spatial information file. A target video representation (or referred to as a target video bitstream) associated with the spatial information file is represented by associationId="zoomed", and the spatial information file is associated with a target video representation whose representation ID is "zoomed".

The client may obtain the manner of carrying the spatial information by parsing the MPD, so as to obtain the spatial information based on the carrying manner.

In some embodiments, the spatial information data or the spatial information track may further include a width and height type identifier used to indicate the target spatial object. The width and height type identifier may be used to indicate a coordinate system used to describe the width and height of the target spatial object, or the width and height type identifier may be used to indicate a coordinate system used to describe a boundary of the target spatial object. The width and height type identifier may be one identifier, or may include a width type identifier and a height type identifier.

The width and height type identifier and the same-attribute spatial information may be encapsulated in a same box (for example, a 3dsc box), or the width and height type identifier and the different-attribute spatial information of the target spatial object may be encapsulated in a same box (for example, an mdat box).

In specific implementation, the server may encapsulate the width and height type identifier and the same-attribute spatial information in a same box (for example, a 3dsc box). Further, when the target spatial information is encapsulated in a file (a spatial information file) independent of the target video data or a track (a spatial information track) independent of the target video data, the server may add the width and height type identifier to the 3dsc box.

### Example (Example 1) of adding the width and height type identifier:

```
          aligned(8) class 3DSphericalCoordinatesSampleEntry//the same-attribute
 spatial information
            extends MetadataSampleEntry ('3dsc') { ......
          unsigned int(2) edge_type;// the width and height type identifier
          ...... }
```

In some embodiments, the same-attribute spatial information and the different-attribute spatial information of the target spatial object may be encapsulated in track metadata (track metadata) of spatial information of a video, for example, may be encapsulated in a same box, such as a trun box, a tfhd box, or a new box.

### Example (Example 2) of adding the spatial information:

```
          syntax (syntax) of a trun box, a tfhd box, or a new box{ ...
             unsigned int(2) edge_type;// the width and height type identifier
          ... }
```

In this example, when the width and height type identifier is 0, the coordinate system used to describe the width and the height of the target spatial object is shown in FIG. 10. A shaded part of a sphere is the target spatial object, and vertices of four corners of the target spatial object are respectively B, E, G, and I. In FIG. 10, O is a sphere center corresponding to a spherical image of a 360-degree VR panoramic video, and the vertices B, E, G, and I are separately points that are on the sphere and at which circles that pass through the sphere center (the sphere center O is used as a center of the circle, and a radius of the circle is a radius of the sphere corresponding to the spherical image of the 360-degree VR panoramic video, the circle passes through a z-axis, and there are two such circles with one passing through points B, A, I, and O, and the other one passing through points E, F, G, and O) intersect with circles parallel to an x-axis and a y-axis (the sphere center O is not used as a center of the circle, there are two such circles with one passing through points B, D, and E, and the other one passing through points I, H, and G, and the two circles are parallel to each other). C is the central point of the target spatial object, an angle corresponding to an edge DH represents the height of the target spatial object, an angle corresponding to an edge AF represents the width of the target spatial object, and the edge DH and the edge AF pass through the point C. An edge BI, an edge EG, and the edge DH are corresponding to a same angle; and an edge BE, an edge IG, and the edge AF are corresponding to a same angle. A vertex of an angle corresponding to the edge BE is J, and J is a point at which the z-axis intersects with the circle that is in the foregoing circles and on which the points B, D, and E are located. Correspondingly, a vertex of an angle corresponding to the edge IG is a point at which the z-axis intersects with the circle that is in the foregoing circles and on which the points I, H, and G are located. A vertex of an angle corresponding to the edge AF is the point O, and each of vertices of angles corresponding to the edge BI, the edge EG, and the edge DH is also the point O.

It should be noted that the foregoing is only an example. The target spatial object may be obtained when two circles passing through the x-axis intersect with two circles that are parallel to the y-axis and the z-axis and that do not pass through the sphere center; or the target spatial object may be obtained when two circles passing through the y-axis intersect with two circles that are parallel to the x-axis and the z-axis and that do not pass through the sphere center.

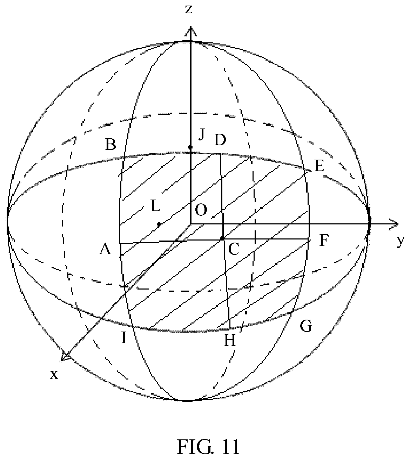

When the width and height type identifier is 1, the coordinate system used to describe the width and the height of the target spatial object is shown in FIG. 11. A shaded part of a sphere is the target spatial object, and vertices of four corners of the target spatial object are respectively B, E, G, and I. In FIG. 11, O is a sphere center corresponding to a spherical image of a 360-degree VR panoramic video, and the vertices B, E, G, and I are separately points that are on the sphere and at which circles passing through a z-axis (the sphere center O is used as a center of the circle, a radius of the circle is a radius of the sphere corresponding to the spherical image of the 360-degree VR panoramic video, and there are two such circles with one passing through points B, A, and I, and the other one passing through points E, F, and G) intersect with circles passing through a y-axis (the sphere center O is used as a center of the circle, a radius of the circle is the radius of the sphere corresponding to the spherical image of the 360-degree VR panoramic video, and there are two such circles with one passing through points B, D, and E, and the other one passing through points I, H, and G). C is the central point of the target spatial object, an angle corresponding to an edge DH represents the height of the target spatial object, an angle corresponding to an edge AF represents the width of the target spatial object, and the edge DH and the edge AF pass through the point C. An edge BI, an edge EG, and the edge DH are corresponding to a same angle; and an edge BE, an edge IG, and the edge AF are corresponding to a same angle. A vertex of an angle corresponding to the edge BE is a point J, and the point J is a point at which the z-axis intersects with a circle that passes through the points B and E and that is parallel to an x-axis and the y-axis. A vertex of an angle corresponding to the edge IG is a point at which the z-axis intersects with a circle that passes through the points I and G and that is parallel to the x-axis and the y-axis. A vertex of an angle corresponding to the edge AF is the point O. A vertex of an angle corresponding to the edge BI is a point L, and the point L is a point at which the y-axis intersects with a circle that passes through the points B and I and that is parallel to the z-axis and the x-axis. A vertex of an angle corresponding to the edge EG is a point at which the y-axis intersects with a circle that passes through the points E and G and that is parallel to the z-axis and the x-axis. A vertex of an angle corresponding to the edge DH is also the point O.

It should be noted that the foregoing is only an example. The target spatial object may be obtained when two circles passing through the x-axis intersect with two circles passing through the z-axis; or the target spatial object may be obtained when two circles passing through the x-axis intersect with two circles passing through the y-axis.

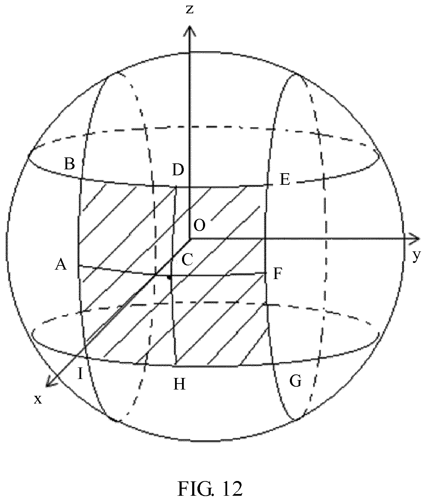

When the width and height type identifier is 2, the coordinate system used to describe the width and the height of the target spatial object is shown in FIG. 12. A shaded part of a sphere is the target spatial object, and vertices of four corners of the target spatial object are respectively B, E, G, and I. In FIG. 12, O is a sphere center corresponding to a spherical image of a 360-degree VR panoramic video, and the vertices B, E, G, and I are separately points that are on the sphere and at which circles parallel to an x-axis and a z-axis (the sphere center O is not used as a center of the circle, there are two such circles with one passing through points B, A, and I, and the other one passing through points E, F, and G, and the two circles are parallel to each other) intersect with circles parallel to the x-axis and y-axis (the sphere center O is not used as a center of the circle, there are two such circles with one passing through points B, D, and E, and the other one passing through points I, H, and G, and the two circles are parallel to each other). C is the central point of the target spatial object, an angle corresponding to an edge DH represents the height of the target spatial object, an angle corresponding to an edge AF represents the width of the target spatial object, and the edge DH and the edge AF pass through the point C. An edge BI, an edge EG, and the edge DH are corresponding to a same angle; and an edge BE, an edge IG, and the edge AF are corresponding to a same angle. Each of vertices of angles corresponding to the edge BE, the edge IG, and the edge AF is the point O; and each of vertices of angles corresponding to the edge BI, the edge EG, and the edge DH is also the point O.

It should be noted that the foregoing is only an example. The target spatial object may be obtained when two circles that are parallel to the y-axis and the z-axis and that do not pass through the sphere center intersect with two circles that are parallel to the y-axis and the x-axis and that do not pass through the sphere center; or the target spatial object may be obtained when two circles that are parallel to the y-axis and the z-axis and that do not pass through the sphere center intersect with two circles that are parallel to the z-axis and the x-axis and that do not pass through the sphere center.

A manner of obtaining the point J and the point L in FIG. 11 is the same as a manner of obtaining the point J in FIG. 10. The vertex of the angle corresponding to the edge BE is the point J, and the vertex of the angle corresponding to the edge BI is the point L. In FIG. 12, each of the vertices corresponding to the edge BE and the edge BI is the point O.

In some embodiments, the same-attribute spatial information and the different-attribute spatial information of the target spatial object may also include description information of the target spatial object. For example, the description information is used to describe the target spatial object as a field of view region (for example, the target spatial object may be a spatial object corresponding to a bitstream of a field of view) or a region of interest; or the description information is used to describe quality information of the target spatial object. The description information may be added to the syntax (syntax) in the 3dsc box, the trun box, or the tfhd box in the foregoing embodiment, or the description information (content type) may be added to SphericalCoordinatesSample, so as to implement one or more of the following functions: describing the target spatial object as a field of view region, describing the target spatial object as a region of interest, and describing the quality information of target spatial object.

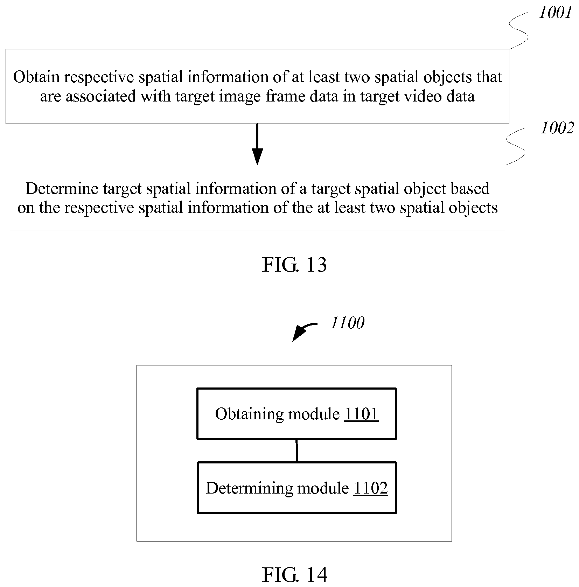

FIG. 13 is a schematic flowchart of a streaming media information processing method according to an embodiment of the present invention. An execution body of the method may be a server, and may be specifically a computer device. As shown in FIG. 13, the method may include the following steps:

S1001. Obtain respective spatial information of two spatial objects that are associated with data of two images that is in target video data.

S1002. Determine target spatial information of a target spatial object based on the respective spatial information of the two spatial objects, where the target spatial object is one of two spatial objects, the target spatial information includes same-attribute spatial information, the same-attribute spatial information includes same information between the respective spatial information of the two spatial objects, and spatial information of a spatial object other than the target spatial object in the two spatial objects includes the same-attribute spatial information.

In some embodiments, the method may further include: sending the target spatial information to a client.

In some embodiments, the target spatial information may further include different-attribute spatial information of the target spatial object, the spatial information of the other spatial object further includes different-attribute spatial information of the other spatial object, and the different-attribute spatial information of the target spatial object is different from the different-attribute information of the other spatial object.

In some embodiments, the target spatial information may include location information of a central point of the target spatial object or location information of an upper-left point of the target spatial object, and the target spatial information may further include a width of the target spatial object and a height of the target spatial object.

Correspondingly, the respective spatial information of the two spatial objects may include location information of respective central points of the two spatial objects or location information of respective upper-left points of the two spatial objects, and the respective spatial information of the two spatial objects may further include respective widths of the two spatial objects and respective heights of the two spatial objects.

In some embodiments, the target spatial information may include location information of an upper-left point of the target spatial object and location information of a lower-right point of the target spatial object.

Correspondingly, the respective spatial information of the two spatial objects may include location information of respective upper-left points of the two spatial objects and location information of respective lower-right points of the two spatial objects.

In some embodiments, the target spatial information may include spatial rotation information of the target spatial object.

Correspondingly, the respective spatial information of the two spatial objects may include respective spatial rotation information of the two spatial objects.

In some embodiments, the target spatial information may be encapsulated in spatial information data or a spatial information track (track), the spatial information data may be a bitstream of the target video data, metadata of the target video data, or a file independent of the target video data, and the spatial information track may be a track independent of the target video data.

The spatial information data or the spatial information track may further include a spatial information type identifier used to indicate a type of the same-attribute spatial information, and the spatial information type identifier is used to indicate information that is in the target spatial information and that belongs to the same-attribute spatial information.

When the spatial information type identifier indicates that the target spatial information has no information belonging to the same-attribute spatial information, the same-attribute spatial information may include a minimum value of the width of the target spatial object, a minimum value of the height of the target spatial object, a maximum value of the width of the target spatial object, and a maximum value of the height of the target spatial object.

The spatial information type identifier and the same-attribute spatial information may be encapsulated in a same box.

The spatial information data or the spatial information track may further include a coordinate system identifier used to indicate a coordinate system corresponding to the target spatial information, and the coordinate system is a pixel coordinate system or an angular coordinate system.

The coordinate system identifier and the same-attribute spatial information may be encapsulated in a same box.

The spatial information data or the spatial information track may further include a spatial rotation information identifier, and the spatial rotation information identifier is used to indicate whether the target spatial information includes the spatial rotation information of the target spatial object.

It may be understood that for a specific implementation process or implementation solution of the streaming media information processing method in this embodiment, refer to related descriptions of the method embodiment corresponding to FIG. 8. Details are not described herein again.

FIG. 14 shows a streaming media information processing apparatus 1100 according to an embodiment of the present invention. The information processing apparatus 1100 may be a server, and may be specifically a computer device. The apparatus 1100 includes an obtaining module 1101 and a determining module 1102.

The obtaining module 1101 is configured to obtain target spatial information of a target spatial object. The target spatial object is one of two spatial objects, the two spatial objects are associated with data of two images that is included in target video data, the target spatial information includes same-attribute spatial information, the same-attribute spatial information includes same information between respective spatial information of the two spatial objects, and spatial information of a spatial object other than the target spatial object in the two spatial objects includes the same-attribute spatial information.

The determining module 1102 is configured to determine, based on the target spatial information obtained by the obtaining module, video data that needs to be played.

In some embodiments, the information processing apparatus 1100 may further include a display module (or referred to as a display), configured to display the video data that needs to be played.

In some embodiments, the obtaining module 1101 is configured to receive the target spatial information from a server. When the obtaining module 1101 is configured to receive the target spatial information from the server, the obtaining module may be a receiving module (or referred to as a receiver or a transceiver).

In some embodiments, the target spatial information may further include different-attribute spatial information of the target spatial object, the spatial information of the other spatial object further includes different-attribute spatial information of the other spatial object, and the different-attribute spatial information of the target spatial object is different from the different-attribute information of the other spatial object.

In some embodiments, the target spatial information may include location information of a central point of the target spatial object or location information of an upper-left point of the target spatial object, and the target spatial information may further include a width of the target spatial object and a height of the target spatial object.

Correspondingly, the respective spatial information of the two spatial objects may include location information of respective central points of the two spatial objects or location information of respective upper-left points of the two spatial objects, and the respective spatial information of the two spatial objects may further include respective widths of the two spatial objects and respective heights of the two spatial objects.

In some embodiments, the target spatial information may include location information of an upper-left point of the target spatial object and location information of a lower-right point of the target spatial object.

Correspondingly, the respective spatial information of the two spatial objects may include location information of respective upper-left points of the two spatial objects and location information of respective lower-right points of the two spatial objects.

In some embodiments, the target spatial information may include spatial rotation information of the target spatial object.

Correspondingly, the respective spatial information of the two spatial objects may include respective spatial rotation information of the two spatial objects.

In some embodiments, the target spatial information may be encapsulated in spatial information data or a spatial information track (track), the spatial information data may be a bitstream of the target video data, metadata of the target video data, or a file independent of the target video data, and the spatial information track may be a track independent of the target video data.

The spatial information data or the spatial information track may further include a spatial information type identifier used to indicate a type of the same-attribute spatial information, and the spatial information type identifier is used to indicate information that is in the target spatial information and that belongs to the same-attribute spatial information.

When the spatial information type identifier indicates that the target spatial information has no information belonging to the same-attribute spatial information, the same-attribute spatial information may include a minimum value of the width of the target spatial object, a minimum value of the height of the target spatial object, a maximum value of the width of the target spatial object, and a maximum value of the height of the target spatial object.

The spatial information type identifier and the same-attribute spatial information may be encapsulated in a same box.

The spatial information data or the spatial information track may further include a coordinate system identifier used to indicate a coordinate system corresponding to the target spatial information, and the coordinate system is a pixel coordinate system or an angular coordinate system.

The coordinate system identifier and the same-attribute spatial information may be encapsulated in a same box.

The spatial information data or the spatial information track may further include a spatial rotation information identifier, and the spatial rotation information identifier is used to indicate whether the target spatial information includes the spatial rotation information of the target spatial object.

It may be understood that functions of the obtaining module 1101 and the determining module 1102 may be implemented through software programming, may be implemented through hardware programming, or may be implemented through a circuit. This is not limited herein.

It may be understood that the functions of the modules of the streaming media information processing apparatus 1100 in this embodiment may be specifically implemented based on the method in the foregoing method embodiment. For a specific implementation process thereof, refer to related descriptions in the foregoing method embodiment. Details are not described herein again.

FIG. 15 shows a streaming media information processing apparatus 1200 according to an embodiment of the present invention. The apparatus includes an obtaining module 1201 and a determining module 1202.

The obtaining module 1201 is configured to obtain respective spatial information of two spatial objects that are associated with data of two images that is in target video data.

The determining module 1202 is configured to determine target spatial information of a target spatial object based on the respective spatial information of the two spatial objects that is obtained by the obtaining module. The target spatial object is one of two spatial objects, the target spatial information includes same-attribute spatial information, the same-attribute spatial information includes same information between the respective spatial information of the two spatial objects, and spatial information of a spatial object other than the target spatial object in the two spatial objects includes the same-attribute spatial information.

In some embodiments, the apparatus 1200 may further include a sending module (or referred to as a transmitter or a transceiver), configured to send the target spatial information determined by the determining module to a client.

In some embodiments, the target spatial information may further include different-attribute spatial information of the target spatial object, the spatial information of the other spatial object further includes different-attribute spatial information of the other spatial object, and the different-attribute spatial information of the target spatial object is different from the different-attribute information of the other spatial object.

In some embodiments, the target spatial information may include location information of a central point of the target spatial object or location information of an upper-left point of the target spatial object, and the target spatial information may further include a width of the target spatial object and a height of the target spatial object.

Correspondingly, the respective spatial information of the two spatial objects may include location information of respective central points of the two spatial objects or location information of respective upper-left points of the two spatial objects, and the respective spatial information of the two spatial objects may further include respective widths of the two spatial objects and respective heights of the two spatial objects.

In some embodiments, the target spatial information may include location information of an upper-left point of the target spatial object and location information of a lower-right point of the target spatial object.

Correspondingly, the respective spatial information of the two spatial objects may include location information of respective upper-left points of the two spatial objects and location information of respective lower-right points of the two spatial objects.

In some embodiments, the target spatial information may include spatial rotation information of the target spatial object.

Correspondingly, the respective spatial information of the two spatial objects may include respective spatial rotation information of the two spatial objects.

In some embodiments, the target spatial information may be encapsulated in spatial information data or a spatial information track (track), the spatial information data may be a bitstream of the target video data, metadata of the target video data, or a file independent of the target video data, and the spatial information track may be a track independent of the target video data.

The spatial information data or the spatial information track may further include a spatial information type identifier used to indicate a type of the same-attribute spatial information, and the spatial information type identifier is used to indicate information that is in the target spatial information and that belongs to the same-attribute spatial information.

When the spatial information type identifier indicates that the target spatial information has no information belonging to the same-attribute spatial information, the same-attribute spatial information may include a minimum value of the width of the target spatial object, a minimum value of the height of the target spatial object, a maximum value of the width of the target spatial object, and a maximum value of the height of the target spatial object.

The spatial information type identifier and the same-attribute spatial information may be encapsulated in a same box.

The spatial information data or the spatial information track may further include a coordinate system identifier used to indicate a coordinate system corresponding to the target spatial information, and the coordinate system is a pixel coordinate system or an angular coordinate system.

The coordinate system identifier and the same-attribute spatial information may be encapsulated in a same box.

The spatial information data or the spatial information track may further include a spatial rotation information identifier, and the spatial rotation information identifier is used to indicate whether the target spatial information includes the spatial rotation information of the target spatial object.

It may be understood that functions of the obtaining module 1201 and the determining module 1202 may be implemented through software programming, may be implemented through hardware programming, or may be implemented through a circuit. This is not limited herein.

It may be understood that the functions of the modules of the streaming media information processing apparatus 1200 in this embodiment may be specifically implemented based on the method in the foregoing method embodiment. For a specific implementation process thereof, refer to related descriptions in the foregoing method embodiment. Details are not described herein again.

FIG. 16 is a schematic diagram of a hardware structure of a computer device 1300 according to an embodiment of the present invention. As shown in FIG. 16, the computer device 1300 may be used as an implementation of the streaming media information processing apparatus 1100, and may also be used as an implementation of the streaming media information processing apparatus 1200. The computer device 1300 includes a processor 1302, a memory 1304, an input/output interface 1306, a communications interface 1308, and a bus 1310. The processor 1302, the memory 1304, the input/output interface 1306, and the communications interface 1308 communicate with and are connected to each other by using the bus 1310.

The processor 1302 may be a general-purpose central processing unit (Central Processing Unit, CPU), a microprocessor, an application-specific integrated circuit (Application Specific Integrated Circuit, ASIC), or one or more integrated circuits, and is configured to execute a related program, so as to implement the functions that need to be performed by the modules included in the streaming media information processing apparatus 1100 or the streaming media information processing apparatus 1200 provided in the embodiments of the present invention, or to perform the streaming media information processing method corresponding to FIG. 8 or FIG. 13 provided in the method embodiments of the present invention. The processor 1302 may be an integrated circuit chip and has a signal processing capability. In an implementation process, steps in the foregoing methods can be implemented by using a hardware integrated logical circuit in the processor 1302, or by using instructions in a form of software. The processor 1302 may be a general purpose processor, a digital signal processor (DSP), an application-specific integrated circuit (ASIC), a field programmable gate array (FPGA) or another programmable logic device, a discrete gate or a transistor logic device, or a discrete hardware component. The processor 1302 may implement or perform the methods, the steps, and logical block diagrams that are disclosed in the embodiments of the present invention. The general-purpose processor may be a microprocessor, or the processor may be any conventional processor or the like. Steps of the methods disclosed with reference to the embodiments of the present invention may be directly performed and completed by using a hardware decoding processor, or may be performed and completed by using a combination of hardware and software modules in the decoding processor. A software module may be located in a mature storage medium in the art, such as a random access memory, a flash memory, a read-only memory, a programmable read-only memory, an electrically erasable programmable memory, a register, or the like. The storage medium is located in the memory 1304. The processor 1302 reads information in the memory 1304, and completes, with reference to hardware of the processor 1302, the functions that need to be performed by the modules included in the streaming media information processing apparatus 1100 or the streaming media information processing apparatus 1200 provided in the embodiments of the present invention, or performs the streaming media information processing method corresponding to FIG. 8 or FIG. 13 provided in the method embodiments of the present invention.

The memory 1304 may be a read-only memory (Read Only Memory, ROM), a static storage device, a dynamic storage device, or a random access memory (Random Access Memory, RAM). The memory 1304 may store an operating system and another application program. When software or firmware is used to implement the functions that need to be performed by the modules included in the streaming media information processing apparatus 1100 or the streaming media information processing apparatus 1200 provided in the embodiments of the present invention, or to perform the streaming media information processing method corresponding to FIG. 8 or FIG. 13 provided in the method embodiments of the present invention, program code used to implement the technical solutions provided in the embodiments of the present invention is stored in the memory 1304. The processor 1302 performs operations that need to be performed by the modules included in the streaming media information processing apparatus 1100 or the streaming media information processing apparatus 1200 provided in the embodiments of the present invention, or performs a method that is for generating a regression model used to predict a key performance indicator and that is provided in the embodiments of the present invention.

The input/output interface 1306 is configured to receive data and information that are input, and output data such as an operation result. The input/output interface 1306 may serve as the obtaining module 1101 in the apparatus 1100, or the obtaining module 1201 or the sending module in the apparatus 1200.

The communications interface 1308 implements communication between the computer device 1300 and another device or a communications network by using a transceiver apparatus including but not limited to a transceiver. The communications interface 1308 may serve as the obtaining module 1101 in the apparatus 1100, or the obtaining module 1201 or the sending module in the apparatus 1200.

The bus 1310 may include a channel used to transfer information between components (such as the processor 1302, the memory 1304, the input/output interface 1306, and the communications interface 1308) of the computer device 1300.

It should be noted that although for the computer device 1300 shown in FIG. 16, merely the processor 1302, the memory 1304, the input/output interface 1306, the communications interface 1308, and the bus 1310 are shown, in a specific implementation process, a person skilled in the art should understand that the computer device 1300 further includes another component required for normal running. For example, when the computer device 1300 is used as an implementation of the streaming media information processing apparatus 1100, the streaming media information processing apparatus 1100 may further include a display, configured to display video data that needs to be played. In addition, a person skilled in the art should understand that according to a specific requirement, the computer device 1300 may further include a hardware component that implements another additional function. In addition, a person skilled in the art should understand that the computer device 1300 may include only a component required for implementing this embodiment of the present invention, and does not need to include all components shown in FIG. 16.

It should be noted that for ease of the description, the foregoing method embodiments are expressed as a series of actions. However, a person skilled in the art should appreciate that the present invention is not limited to the described action sequence, because according to the present invention, some steps may be performed in other sequences or performed simultaneously. In addition, a person skilled in the art should also appreciate that all the embodiments described in the specification are example embodiments, and the related actions and modules are not necessarily mandatory to the present invention. A person of ordinary skill in the art may understand that all or some of the processes of the methods in the embodiments may be implemented by a computer program instructing relevant hardware. The program may be stored in a computer readable storage medium. When the program runs, the processes of the methods in the embodiments are performed. The foregoing storage medium may include a magnetic disk, an optical disc, a read-only memory (ROM: Read-Only Memory), or a random access memory (RAM: Random Access Memory).

Although the present invention is described with reference to the embodiments, in a process of implementing the present invention that claims protection, a person skilled in the art may understand and implement another variation of the disclosed embodiments by viewing the accompanying drawings, disclosed content, and the accompanying claims. In the claims, "comprising" (comprising) does not exclude another component or another step, and "a" or "one" does not exclude a case of "a plurality of'. A single processor or another unit may implement several functions enumerated in the claims. Some measures are recorded in dependent claims that are different from each other, but this does not mean that these measures cannot be combined to produce a better effect. A computer program may be stored/distributed in an appropriate medium such as an optical storage medium or a solid-state medium and be provided together with other hardware or be used as a part of hardware, or may be distributed in another manner, for example, by using the Internet, or another wired or wireless telecommunications system.

Specific examples are used in this specification to describe the principles and implementations of the present invention. The descriptions of the foregoing embodiments are merely intended to help understand the method and idea of the present invention. In addition, with respect to the implementations and the application scope, modifications may be made by a person of ordinary skill in the art according to the idea of the present invention. Therefore, this specification shall not be construed as a limitation on the present invention.

## Claims

1. A streaming media information processing method, wherein the method comprises:
obtaining target spatial information of a target spatial object, wherein the target spatial object is one of two spatial objects, the two spatial objects are associated with data of two images that is comprised in target video data, the target spatial information comprises same-attribute spatial information, the same-attribute spatial information comprises same information between respective spatial information of the two spatial objects, and spatial information of a spatial object other than the target spatial object in the two spatial objects comprises the same-attribute spatial information; and
determining, based on the target spatial information, video data that to be played.

2. The method according to claim 1, wherein the target spatial information further comprises different-attribute spatial information of the target spatial object, the spatial information of the other spatial object further comprises different-attribute spatial information of the other spatial object, and the different-attribute spatial information of the target spatial object is different from the different-attribute information of the other spatial object.

3. The method according to claim 1 or 2, wherein the target spatial information comprises location information of a central point of the target spatial object or location information of an upper-left point of the target spatial object, and the target spatial information further comprises a width of the target spatial object and a height of the target spatial object.

4. The method according to claim 1 or 2, wherein the target spatial information comprises location information of an upper-left point of the target spatial object and location information of a lower-right point of the target spatial object.

5. The method according to any one of claims 1 to 4, wherein the target spatial information comprises spatial rotation information of the target spatial object.

6. The method according to any one of claims 1 to 5, wherein the target spatial information is encapsulated in spatial information data or a spatial information track (track), the spatial information data is a bitstream of the target video data, metadata of the target video data, or a file independent of the target video data, and the spatial information track is a track independent of the target video data.

7. The method according to claim 6, wherein the spatial information data or the spatial information track further comprises a spatial information type identifier used to indicate a type of the same-attribute spatial information, and the spatial information type identifier is used to indicate information that is in the target spatial information and that belongs to the same-attribute spatial information.

8. The method according to claim 7, wherein when the spatial information type identifier indicates that the target spatial information has no information belonging to the same-attribute spatial information, the same-attribute spatial information comprises a minimum value of the width of the target spatial object, a minimum value of the height of the target spatial object, a maximum value of the width of the target spatial object, and a maximum value of the height of the target spatial object.

9. The method according to claim 7 or 8, wherein the spatial information type identifier and the same-attribute spatial information are encapsulated in a same box.

10. The method according to any one of claims 6 to 9, wherein the spatial information data or the spatial information track further comprises a coordinate system identifier used to indicate a coordinate system corresponding to the target spatial information, and the coordinate system is a pixel coordinate system or an angular coordinate system.

11. The method according to claim 10, wherein the coordinate system identifier and the same-attribute spatial information are encapsulated in a same box.

12. The method according to any one of claims 6 to 11, wherein the spatial information data or the spatial information track further comprises a spatial rotation information identifier, and the spatial rotation information identifier is used to indicate whether the target spatial information comprises the spatial rotation information of the target spatial object.

13. A streaming media information processing apparatus, wherein the apparatus comprises:
an obtaining module, configured to obtain target spatial information of a target spatial object, wherein the target spatial object is one of two spatial objects, the two spatial objects are associated with data of two images that is comprised in target video data, the target spatial information comprises same-attribute spatial information, the same-attribute spatial information comprises same information between respective spatial information of the two spatial objects, and spatial information of a spatial object other than the target spatial object in the two spatial objects comprises the same-attribute spatial information; and
a determining module, configured to determine, based on the target spatial information obtained by the obtaining module, video data to be played.

14. The apparatus according to claim 13, wherein the target spatial information further comprises different-attribute spatial information of the target spatial object, the spatial information of the other spatial object further comprises different-attribute spatial information of the other spatial object, and the different-attribute spatial information of the target spatial object is different from the different-attribute information of the other spatial object.

15. The apparatus according to claim 13 or 14, wherein the target spatial information comprises location information of a central point of the target spatial object or location information of an upper-left point of the target spatial object, and the target spatial information further comprises a width of the target spatial object and a height of the target spatial object.
